# EUROPEAN PATENT APPLICATION

(11) **EP 4 761 355 A1**
(43) Date of publication of application: **17.06.2026**
(21) Application number: 24858541.6
(22) Date of filing: 26.08.2024
(51) Int. Cl.: H04W 36/00

(54) **COMMUNICATION METHOD AND APPARATUS**

(30) Priority: 30.08.2023 CN 202311128683
(71) Applicant: HUAWEI TECHNOLOGIES CO., LTD., Shenzhen, Guangdong 518129 (CN)
(72) Inventor: GU, Zhifang, Shenzhen, Guangdong 518129 (CN); FAN, Qiang, Shenzhen, Guangdong 518129 (CN); YOU, Chunhua, Shenzhen, Guangdong 518129 (CN)
(74) Representative: Goddar, Heinz J.
(86) International application number: PCT/CN2024/114648
(87) International publication number: WO 2025/045005

(57) **Abstract**

Embodiments of this application provide a communication method and apparatus. The method includes: A terminal device receives a first handover message from a first access network device, where the first handover message indicates the terminal device to switch, to a second cell, from a first cell in which the terminal device is currently located, and the second cell is a cell managed by a second access network device. The terminal device performs first data transmission with the second access network device based on the first handover message by using a secret key of the first cell. According to the method, it can be ensured that duration of communication interruption that occurs when the terminal device performs cell switch is short.

## Description

### CROSS-REFERENCE TO RELATED APPLICATIONS

This application claims priority to Chinese Patent Application No. 202311128683.4, filed with the China National Intellectual Property Administration on August 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, a communication link between a terminal device and an access network device changes because the terminal moves. The access network device indicates, based on the movement of the terminal device, the terminal device to perform cell switch. In a process in which the terminal device switches from a source cell to a target cell, interruption duration may be caused, affecting user experience.

Currently, to resolve this problem, an existing solution is as follows: The terminal device maintains communication with a source base station and a target base station respectively through two communication links, and a dual active protocol stack is used for communication. However, such a solution has high implementation complexity, high hardware requirements, and high implementation costs. Therefore, how to implement cell switch (or referred to as base station switching) of the terminal device with low interruption when complexity and hardware costs are low is one of urgent problems to be resolved currently.

### SUMMARY

This application provides a communication method and apparatus, to ensure that duration of communication interruption that occurs when a terminal device performs cell switch is short.

According to a first aspect, an embodiment of this application provides a communication method. The method may be performed by a terminal device, or may be performed by a chip corresponding to the terminal device. This is not limited herein. The method may specifically include: receiving a first handover message from a first access network device, where the first handover message indicates the terminal device to switch, to a second cell, from a first cell in which the terminal device is currently located, and the second cell is a cell managed by a second access network device; and performing first data transmission with the second access network device based on the first handover message by using a secret key of the first cell.

In this embodiment of this application, the first cell is a cell that has been currently accessed by the terminal device, and the terminal device communicates with the first access network device (for example, a base station) via the first cell. The second cell is a cell that is not currently accessed by the terminal device and that is to be accessed by the terminal device. The terminal device may communicate with the second access network device by accessing the second cell. In the foregoing descriptions, the secret key of the first cell is derived based on configuration information of the secret key of the first cell.

In the solution of this application, when the terminal device receives the first handover message from the first access network device, to indicate the terminal device to switch, to the second cell, from the first cell in which the terminal device is currently located, the terminal device may still perform data transmission with the second access network device by using the secret key of the first cell, to ensure that duration of communication interruption that occurs when the terminal device performs cell switch is short.

In a possible implementation, the first handover message includes cell configuration indication information, and the cell configuration indication information indicates that the second cell uses same configuration information as the first cell.

In this implementation, the terminal device is indicated that the configuration information used by the second cell to which the terminal device is to switch is the same as the configuration information of the first cell in which the terminal device is currently located. In this case, the terminal device may quickly and accurately establish a communication connection to the second cell by referring to the configuration information of the first cell.

In a possible implementation, that the terminal device performs first data transmission with the second access network device by using the secret key of the first cell includes: when the communication connection to the second cell is established, and a secret key of the second cell is not derived, performing first data transmission with the second access network device by using the secret key of the first cell.

In this implementation, effective communication between the terminal device and the second cell can be ensured, and the duration of the communication interruption that occurs when the terminal device performs cell switch can be effectively reduced.

In a possible implementation, that the terminal device performs first data transmission with the second access network device by using the secret key of the first cell includes: performing encryption and integrity protection processing on uplink data by using the secret key of the first cell, to obtain uplink first data; and sending the uplink first data to the second access network device; and/or receiving downlink first data from the second access network device, and performing decryption and integrity check processing on the downlink first data by using the secret key of the first cell.

In this implementation, the terminal device may perform effective uplink and/or downlink data transmission with the second access network device by using the secret key of the first cell.

In a possible implementation, after the terminal device establishes the communication connection to the second cell, the method further includes: receiving configuration information of the secret key of the second cell from the second access network device.

In this implementation, the terminal device can effectively derive the secret key of the second cell by using the configuration information of the secret key of the second cell.

In a possible implementation, the method further includes: The terminal device identifies the first data by using a first target identifier, where the first target identifier may be but is not limited to an identifier of a first bearer, an identifier of a first logical channel, or a first identifier carried in the first data, where the first identifier may indicate specific data that belongs to the first data, and the first bearer or the first logical channel is used for transmission of the first data.

In this implementation, the terminal device may effectively and accurately identify that data from the second access network device is the first data, so that the secret key of the first cell can be accurately used to process the first data.

In a possible implementation, after the terminal device derives the secret key of the second cell, the method further includes: The terminal device performs encryption and integrity protection processing on uplink data by using the secret key of the second cell, to obtain uplink second data; and sends the uplink second data to the second access network device; and/or receives downlink second data from the second access network device, and performs decryption and integrity check processing on the downlink second data by using the secret key of the second cell.

In this implementation, after deriving the secret key of the second cell, the terminal device may effectively use the secret key of the second cell to perform data transmission with the second access network device.

In a possible implementation, the method further includes: The terminal device may identify the second data by using a second target identifier, where the second target identifier may be but is not limited to an identifier of a second bearer, an identifier of a second logical channel, or a second identifier carried in the second data, where the second identifier may indicate specific data that belongs to the second data, and the second bearer or the second logical channel is used for transmission of the second data.

In this implementation, the terminal device may effectively and accurately identify that data from the second access network device is the second data, so that the secret key of the second cell can be accurately used to process the second data.

In a possible implementation, the method further includes: The terminal device receives first indication information from the second access network device, where the first indication information indicates the terminal device to perform one or more of the following: stopping using the secret key of the first cell to process data, deleting the secret key of the first cell, stopping processing associated with the secret key of the first cell, releasing the first bearer or the first logical channel of the first data, and stopping including the second identifier in the second data.

In this implementation, the terminal device can no longer use the secret key of the first cell and stop communication with the first cell.

According to a second aspect, an embodiment of this application provides a communication method. The method may be performed by a first access network device, or may be performed by a chip corresponding to the first access network device. This is not limited herein. The method may specifically include: sending a first handover message to a terminal device, where the first handover message indicates the terminal device to switch, to a second cell, from a first cell in which the terminal device is currently located, and the second cell is a cell managed by a second access network device; and performing first data transmission with the second access network device by using a secret key of the first cell.

In this embodiment of this application, the first cell is a cell that has been currently accessed by the terminal device, and the terminal device communicates with the first access network device (for example, a base station) via the first cell. The second cell is a cell that is not currently accessed by the terminal device and that is to be accessed by the terminal device. The terminal device may communicate with the second access network device by accessing the second cell. In the foregoing descriptions, the secret key of the first cell is derived based on configuration information of the secret key of the first cell.

In the solution of this application, when the first access network device indicates the terminal device to switch, to the second cell, from the first cell in which the terminal device is currently located, the first access network device may perform first data transmission with the second access network device by using the secret key of the first cell. Correspondingly, a terminal device side may also perform first data transmission with the second access network device by using the secret key of the first cell. This is equivalent to that the first access network device may perform first data transmission with the terminal device via the second access network device. Therefore, it can be ensured that duration of communication interruption that occurs when the terminal device performs cell switch is short.

In a possible implementation, before the first access network device sends the first handover message to the terminal device, the method further includes: sending first handover request information to the second access network device, where the first handover request information includes address information of a user plane tunnel of the first access network device; and receiving first handover response information from the second access network device, where the first handover response information includes address information of a user plane tunnel of the second access network device.

In this implementation, it can be ensured that accurate and effective data transmission is subsequently performed between the first access network device and the second access network device.

In a possible implementation, the first handover request information further includes third indication information, and the third indication information is used to request the second cell to use configuration information of the first cell; the first handover response information indicates that the second cell acknowledges to use the configuration information of the first cell; and the configuration information of the first cell includes uplink physical layer channel configuration information of the first cell and downlink physical layer channel configuration information of the first cell.

In this implementation, the second cell may be effectively enabled to use the same configuration information as the first cell, so that the terminal device can quickly and accurately access the second cell subsequently.

In a possible implementation, before the first access network device performs first data transmission with the second access network device by using the secret key of the first cell, the method further includes: receiving a first response message from the terminal device, where the first response message is used to notify that the terminal device acknowledges to switch from the first cell to the second cell. Performing first data transmission with the second access network device by using the secret key of the first cell includes: performing encryption and integrity protection processing on downlink data by using the secret key of the first cell, to obtain downlink first data; and sending the downlink first data to the second access network device based on the address information of the user plane tunnel of the second access network device; and/or receiving uplink first data from the second access network device, and performing decryption and integrity check processing on the uplink first data by using the secret key of the first cell, to obtain uplink data.

In this implementation, after the terminal device acknowledges to switch from the first cell to the second cell, the first access network device performs effective uplink and/or downlink first data transmission with the second access network device by using the secret key of the first cell.

In a possible implementation, the method further includes: The first access network device receives second indication information from the second access network device, where the second indication information indicates the first cell or the first access network device to stop generating or sending the first data and release a first bearer or a first logical channel of the first data; and sends first status information to the second access network device, where the first status information indicates identification information of the first data that has been successfully sent and/or is not successfully sent.

In this implementation, the first access network device no longer uses the secret key of the first cell to process data, and stops communication in the first cell. In addition, the first access network device may further feed back, to the second access network device, the identification information of the first data that has been successfully sent or is not successfully sent.

In a possible implementation, the method further includes: The first access network device sends third data to the second access network device, where the third data is the data that is not successfully sent and on which encryption and integrity protection processing are not performed.

In this implementation, the first access network device may continue to transmit, to the terminal device via the second access network device, the data that is not successfully sent.

In a possible implementation, the method further includes: The first access network device may identify the first data by using a first target identifier, where the first target identifier may be but is not limited to an identifier of the first bearer, an identifier of the first logical channel, or a first identifier carried in the first data, where the first identifier may indicate specific data that belongs to the first data, and the first bearer or the first logical channel is used for transmission of the first data.

In this implementation, the first access network device may effectively and accurately identify that data from the second access network device is the first data, so that the secret key of the first cell can be accurately used to process the first data.

According to a third aspect, an embodiment of this application provides a communication method. The method may be performed by a second access network device, or may be performed by a chip corresponding to the second access network device. This is not limited herein. The method may specifically include: receiving downlink first data from a first access network device, and sending the downlink first data to a terminal device; and/or receiving uplink first data from the terminal device, and sending the uplink first data to the first access network device, where the first data is data obtained through encryption and integrity protection processing by using a secret key of a first cell.

In this embodiment of this application, the first cell is a cell that has been currently accessed by the terminal device, and the terminal device communicates with the first access network device (for example, a base station) via the first cell. A second cell is a cell that is not currently accessed by the terminal device and that is to be accessed by the terminal device. The terminal device may communicate with the second access network device by accessing the second cell. In the foregoing descriptions, the secret key of the first cell is derived based on configuration information of the secret key of the first cell.

In the solution of this application, the second access network device may assist the terminal device in performing uplink and/or downlink first data transmission with the first access network device, to reduce duration of communication interruption that occurs when the terminal device performs cell switch.

In a possible implementation, the method further includes: The second access network device receives first handover request information from the first access network device, where the first handover request information includes address information of a user plane tunnel of the first access network device. The second access network device sends first handover response information to the first access network device, where the first handover response information includes address information of a user plane tunnel of the second access network device.

In this implementation, it can be ensured that accurate and effective data transmission is subsequently performed between the second access network device and the first access network device.

In a possible implementation, the first handover request information further includes third indication information, and the third indication information is used to request the second cell to use configuration information of the first cell; the first handover response information indicates that the second cell acknowledges to use the configuration information of the first cell; and the configuration information of the first cell includes uplink physical layer channel configuration information of the first cell and downlink physical layer channel configuration information of the first cell.

In this implementation, the second cell and the first cell may be effectively enabled to use the same configuration information, so that the terminal device can quickly and accurately access the second cell subsequently.

In a possible implementation, that the second access network device sends the uplink first data to the first access network device includes: sending the uplink first data to the first access network device based on the address information of the user plane tunnel of the first access network device.

In this implementation, the second access network device can effectively and accurately send the uplink first data to the first access network device.

In a possible implementation, the method further includes: The second access network device receives uplink second data from the terminal device; performs decryption and integrity check processing on the uplink second data by using a secret key of the second cell, to obtain uplink data; and sends the uplink data to a user plane function network element in a core network device; and/or receives downlink data from the user plane function network element in the core network device and/or the first access network device; performs encryption and integrity protection processing on the downlink data by using the secret key of the second cell, to obtain downlink second data; and sends the downlink second data to the terminal device.

In the foregoing descriptions, the downlink data received by the second access network device from the first access network device may be data that is not successfully sent by the first access network device to the terminal device.

In this implementation, the second access network device may effectively and flexibly process, by using the secret key of the second cell, data from the terminal device, data from the core network device, and data from the first access network device, and perform corresponding data transmission.

In a possible implementation, the method further includes: The second access network device sends path switch request information to an access and mobility management function network element in the core network device after a first event, where the path switch request information is used to request to switch a data transmission path from a corresponding first path between the user plane function network element and the first access network device to a corresponding second path between the user plane function network element and the second access network device, and the first event may be but is not limited to any one of the following:
(1) receiving the downlink first data from the first access network device; (2) receiving the uplink first data from the terminal device; and (3) receiving the uplink second data from the terminal device.

In this implementation, when the terminal device performs communication, the second access network device may be flexibly triggered to request the access and mobility management function network element in a core network to switch the data transmission path between the user function network element in the core network and an access network device.

In a possible implementation, the method further includes: The second access network device receives path switch response information from the access and mobility management function network element, and obtains configuration information of the secret key of the second cell from the path switch response information, where the path switch response information indicates that the data transmission path has been switched from the first path to the second path.

In this implementation, the second access network device may effectively obtain the configuration information of the secret key of the second cell from the access and mobility management function network element in the core network, so that the second access network device can derive the secret key of the second cell by using the configuration information of the secret key of the second cell. The second access network device may further transmit the configuration information of the secret key of the second cell to the terminal device, so that the terminal device can effectively derive the secret key of the second cell.

In a possible implementation, the method further includes: The second access network device sends first indication information to the terminal device, and sends second indication information to the first access network device, where the first indication information indicates the terminal device to perform one or more of the following: stopping using the secret key of the first cell to process data, deleting the secret key of the first cell, stopping processing associated with the secret key of the first cell, releasing a first bearer or a first logical channel of the first data, and stopping including a second identifier in the second data; and the second indication information indicates the first cell or the first access network device to stop generating or sending the first data and release the first bearer or the first logical channel of the first data.

In this implementation, the terminal device and the first access network device (or the first cell) can stop a processing operation associated with the secret key of the first cell, and no longer use the secret key of the first cell to process data and perform communication.

In a possible implementation, the method further includes: The second access network device receives first status information from the first access network device, where the first status information indicates identification information (for example, a sequence number) of the first data that has been successfully sent and/or is not successfully sent.

In this implementation, the second access network device learns of the first data that has been successfully sent and/or is not successfully sent by the first access network device.

In a possible implementation, the method further includes: The second access network device receives third data from the first access network device, where the third data is the data that is not successfully sent and on which encryption and integrity protection processing are not performed.

In this implementation, the second access network device may continue to send, to the terminal device, the data that is not successfully sent by the first access network device.

In a possible implementation, the method further includes: The second access network device identifies the first data by using a first target identifier, where the first target identifier may be but is not limited to an identifier of the first bearer, an identifier of the first logical channel, or a first identifier carried in the first data, where the first bearer or the first logical channel is used for transmission of the first data. The second access network device identifies the second data by using a second target identifier, where the second target identifier may be but is not limited to an identifier of a second bearer, an identifier of a second logical channel, or the first identifier carried in the second data, where the second bearer or the second logical channel is used for transmission of the second data.

In this implementation, the second access network device may effectively and accurately identify the first data and the second data, so that for the first data and the second data, the second access network device can accurately determine a to-be-sent object for transmission.

According to a fourth aspect, an embodiment of this application further provides a communication apparatus. The apparatus may be configured to perform the method according to the first aspect. The apparatus may be a terminal device, or the apparatus may be a component (for example, a chip, a chip system, or a circuit) in the terminal device, or may be an apparatus that can be used in a matching manner with the terminal device.

In a possible implementation, the apparatus may include modules or units in one-to-one correspondence with the methods/operations/steps/actions described in the first aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the first aspect or the possible implementations of the first aspect.

According to a fifth aspect, an embodiment of this application further provides a communication apparatus. The apparatus may be configured to perform the method according to the second aspect. The apparatus may be a first access network device, or the apparatus may be a component (for example, a chip, a chip system, or a circuit) in the first access network device, or may be an apparatus that can be used in a matching manner with the first access network device.

In a possible implementation, the apparatus may include modules or units in one-to-one correspondence with the methods/operations/steps/actions described in the second aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the second aspect or the possible implementations of the second aspect.

According to a sixth aspect, an embodiment of this application further provides a communication apparatus. The apparatus may be configured to perform the method according to the third aspect. The apparatus may be a second access network device, or the apparatus may be a component (for example, a chip, a chip system, or a circuit) in the second access network device, or may be an apparatus that can be used in a matching manner with the second access network device.

In a possible implementation, the apparatus may include modules or units in one-to-one correspondence with the methods/operations/steps/actions described in the third aspect. The modules or units may be implemented by a hardware circuit, software, or a combination of a hardware circuit and software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the third aspect or the possible implementations of the third aspect.

According to a seventh aspect, an embodiment of this application provides an apparatus. The apparatus includes at least one processor and a communication interface. The communication interface is configured to communicate with another apparatus. The processor is configured to run a group of programs, to enable the apparatus to implement the method provided in any one of the first aspect or the possible implementations of the first aspect.

According to an eighth aspect, an embodiment of this application provides an apparatus. The apparatus includes at least one processor and a communication interface. The communication interface is configured to communicate with another apparatus. The processor is configured to run a group of programs, to enable the apparatus to implement the method provided in any one of the second aspect or the possible implementations of the second aspect.

According to a ninth aspect, an embodiment of this application provides an apparatus. The apparatus includes at least one processor and a communication interface. The communication interface is configured to communicate with another apparatus. The processor is configured to run a group of programs, to enable the apparatus to implement the method provided in any one of the third aspect or the possible implementations of the third aspect.

According to a tenth aspect, an embodiment of this application further provides a computer storage medium. The storage medium stores a software program. When the software program is read and executed by one or more processors, the method according to any one of the first aspect or the possible implementations of the first aspect may be implemented, the method according to any one of the second aspect or the possible implementations of the second aspect may be implemented, or the method according to any one of the third aspect or the possible implementations of the third aspect may be implemented.

According to an eleventh aspect, an embodiment of this application further provides a computer program product including instructions. When the computer program product runs on a computer, the method according to any one of the first aspect or the possible implementations of the first aspect is performed, the method according to any one of the second aspect or the possible implementations of the second aspect is performed, or the method according to any one of the third aspect or the possible implementations of the third aspect is performed.

According to a twelfth aspect, an embodiment of this application provides a communication system, including a terminal device that can implement the method according to the first aspect, a first access network device that can implement the method according to the second aspect, and a second access network device that can implement the method according to the third aspect.

According to a thirteenth aspect, an embodiment of this application further provides a chip system. The chip system includes a processor, configured to support a terminal device in implementing functions in the first aspect, configured to support a first access network device in implementing functions in the second aspect, or configured to support a second access network device in implementing functions in the third aspect.

In a possible design, the chip system further includes a memory. The memory is configured to store program instructions and data that are necessary for execution of a loading apparatus. The chip system may include a chip, or may include a chip and another discrete device.

It should be noted that, for technical effects that can be achieved in any one of the fourth aspect to the thirteenth aspect or the possible implementations of the fourth aspect to the thirteenth aspect, correspondingly refer to the descriptions of technical effects that can be achieved in any one of the first aspect to the third aspect or the possible implementations of the first aspect to the third aspect. Details are not described herein again.

### BRIEF DESCRIPTION OF DRAWINGS

FIG. 1A is a diagram of a mobile communication system to which an embodiment of this application may be applied;
FIG. 1B is a diagram of a network architecture to which an embodiment of this application may be applied;
FIG. 2 is a diagram of a structure of a distributed base station according to an embodiment of this application;
FIG. 3 is a schematic flowchart of a communication method according to an embodiment of this application;
FIG. 4 is a specific flowchart of Embodiment 1 according to an embodiment of this application;
FIG. 5 is a specific flowchart of Embodiment 2 according to an embodiment of this application;
FIG. 6A is a diagram of a downlink transmission path according to an embodiment of this application;
FIG. 6B is a diagram of a downlink transmission path according to an embodiment of this application;
FIG. 7 is a specific flowchart of Embodiment 3 according to an embodiment of this application;
FIG. 8 is a diagram of a structure of a communication apparatus according to an embodiment of this application;
FIG. 9 is a diagram of a structure of another communication device according to an embodiment of this application; and
FIG. 10 is a diagram of a structure of a chip according to an embodiment of this application.

### DESCRIPTION OF EMBODIMENTS

The following clearly and completely describes the technical solutions in embodiments of this application with reference to accompanying drawings in embodiments of this application. The terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiments. The terms "include", "comprise", "have", and their variants in this application all mean "include but are not limited to", unless otherwise specifically emphasized in another manner. The term like "example" or "for example" represents an example, an illustration, or a description. Any embodiment or design scheme described with "example" or "for example" should not be explained as being more preferred or having more advantages than another embodiment or design scheme. The terms such as "example" or "for example" are used to present a related concept in a specific manner for ease of understanding.

"A plurality of" in embodiments of this application means "greater than or equal to two". It should be noted that in the descriptions of embodiments of this application, terms such as "first" and "second" or numbers such as "1" and "2" are merely used for distinction in description, and cannot be understood as an indication or implication of relative importance, or an indication or implication of an order. In addition, the term "indicating" mentioned in the descriptions of embodiments of this application may include directly indicating and indirectly indicating. When a piece of indication information indicates A, the indication information may directly indicate A or indirectly indicate A, but this does not mean that the indication information necessarily carries A.

The term "switch" in embodiments of this application may be understood as updating, replacing, or changing. For example, path switch of a UE may mean that after a new path of the UE is determined, a source path of the UE is updated or replaced with the new path, so that the UE performs communication through the new path. Therefore, the term "switch" may alternatively be correspondingly replaced with the term like "updating". This is not limited in this application.

To better understand the solutions in embodiments of this application, the following first describes an application scenario and an existing problem of embodiments of this application. It should be noted that, the application scenario is intended to make embodiments of this application easier to understand, but should not be construed as a limitation to the protection scope claimed in this application.

In a mobile communication system, a communication link between a terminal device and an access network device changes because the terminal moves. The access network device indicates, based on the movement of the terminal device, the terminal device to perform cell switch. In a process of switching the terminal device from a source cell to a target cell, the terminal device needs to communicate with the target base station after performing encryption processing on data and signaling by using a new secret key of a target base station. Because a security encryption function is located at a packet data convergence protocol (packet data convergence protocol, PDCP) layer, after receiving a handover command, the terminal device needs to perform a process of derivation of the new secret key and PDCP re-establishment. Processing duration causes communication interruption in the switching process, affecting user experience.

In view of the foregoing problem, this application provides a communication method. The method can ensure that duration of communication interruption that occurs when a terminal device performs cell switch is short.

The technical solutions in embodiments of this application may be applied to various communication systems, for example, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future 6th generation communication system.

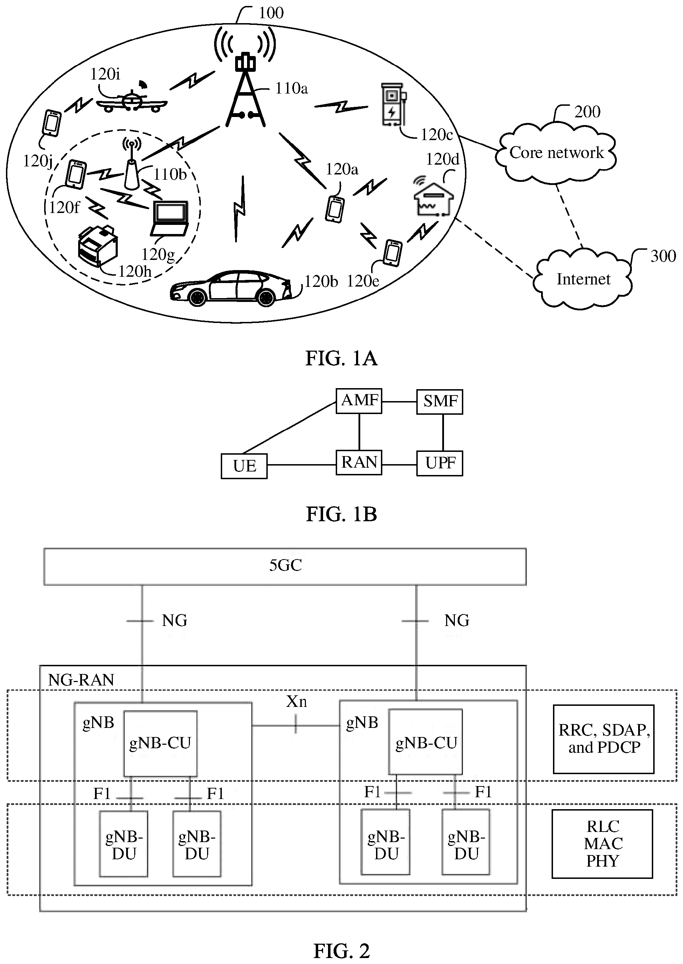

FIG. 1A is a diagram of an architecture of a communication system to which an embodiment of this application may be applied. As shown in FIG. 1A, the communication system includes a radio access network 100 and a core network 200. Optionally, the communication system may further include an internet 300. The radio access network 100 may include at least one access network device (for example, 110a and 110b in FIG. 1A), and may further include at least one terminal (for example, 120a to 120j in FIG. 1A). The terminal is connected to the access network device in a wireless manner, and the access network device is connected to the core network in a wireless or wired manner. A core network device and the access network device may be different physical devices that are independent of each other, functions of the core network device and logical functions of the access network device may be integrated into a same physical device, or some functions of the core network device and some functions of the access network device may be integrated into one physical device. Terminals may be connected to each other in a wired or wireless manner, and access network devices may be connected to each other in a wired or wireless manner. FIG. 1A is merely a diagram. The communication system may further include other network devices, for example, may further include a wireless relay device and a wireless backhaul device, which are not shown in FIG. 1A.

Refer to FIG. 1B. The core network device includes a session management network element, an access management network element, a user plane function network element, and the like.

The session management network element is mainly configured to: manage a session, allocate and manage an internet protocol (internet protocol, IP) address of a terminal device, select a termination point that can manage a user equipment plane function interface and a policy control and charging function interface, perform downlink data notification, and the like. In 5G communication, the session management network element may be a session management function (session management function, SMF) network element. In future communication such as 6G communication, the session management function network element may still be an SMF network element or have another name. This is not limited in this application. Nsmf is a service-based interface provided by the SMF. The SMF may communicate with another network function through Nsmf.

The access management network element is mainly configured for mobility management, access management, and the like. For example, the access management network element may be a mobility management entity (mobility management entity, MME) function in a 4G communication network or an access and mobility management function (access and mobility management function, AMF) network element in a 5G network. In future communication such as 6G communication, the access and management network element may still be an AMF network element or have another name. This is not limited in this application. Namf is a service-based interface provided by the AMF. The AMF may communicate with another network function through Namf.

The user plane function network element is configured for packet routing and forwarding, quality of service (quality of service, QoS) processing of user plane data, or the like. In 5G communication, the user plane network element may be a user plane function (user plane function, UPF) network element. In future communication such as 6G communication, the user plane network element may still be a UPF network element or have another name. This is not limited in this application. FIG. 1B is merely an example of a network architecture to which an embodiment of this application is applicable, and the network architecture further includes another network element (or device). For specific descriptions, refer to a conventional technology. Details are not described herein.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The access network device may alternatively be a module or unit that completes some functions of a base station, for example, may be a central unit (central unit, CU), or may be a distributed unit (distributed unit, DU). The access network device may be a macro base station, may be a micro base station or an indoor base station, or may be a relay node, a donor node, or the like. A specific technology and a specific device form that are used for the access network device are not limited in embodiments of this application. In embodiments of this application, an example in which the base station is used as the access network device is used for description.

In a possible implementation, some functions of the access network device are deployed on one CU, remaining functions are deployed on a DU, and a plurality of DUs share or are connected to one CU. This may reduce costs and facilitate network expansion. The CU and the DU may be split based on a protocol stack. In a possible manner, a radio resource control (radio resource control, RRC) layer, a service data adaptation protocol (service data adaptation protocol, SDAP) layer, and a packet data convergence protocol (PDCP) layer are deployed on the CU, and the rest of layers: a radio link control (radio link control, RLC) layer, a media access control (media access control, MAC) layer, a physical layer (PHYsical, PHY), and the like are deployed on the DU. The CU is connected to the DU through an F1 interface. The CU is connected to the core network through an NG interface on behalf of the gNB, the CU is connected to another gNB through an Xn interface on behalf of the gNB, and on behalf of the gNB, the CU may be further connected to another eNB through an X2 interface to perform a dual connectivity operation. Details are shown in FIG. 2. Further, the CU includes a central unit control plane (control plane, CU-CP) and a central unit user plane (user plane, CU-UP). The CU-UP and the CU-CP may be on a same physical device, or may be on different physical devices. The CU-CP and the CU-UP are connected through an interface (for example, an E1 interface). The CU-CP is connected to the core network through an interface (for example, an Ng interface) on behalf of the base station. The CU-CP is connected to the DU through an interface (for example, an F1-C interface), and the CU-UP is connected to the DU through an interface (for example, an F1-U interface). There may be one CU-CP, and there may be one or more CU-UPs. A plurality of CU-UPs may share one CU-CP. The CU-CP mainly has a control plane function. The CU-UP mainly has a user plane function. In a possible implementation, for a 5G base station, the RRC layer may be deployed on the CU-CP, but the SDAP layer is not deployed on the CU-CP. The CU-CP may further have a part of a control plane function of the PDCP layer. For example, the CU-CP may process a signaling radio bearer (signaling radio bearer, SRB). The SDAP layer may be deployed on the CU-UP, but the RRC layer is not deployed on the CU-UP. The CU-UP may further have a part of a user plane function of the PDCP layer. For example, the CU-UP processes a data radio bearer (data radio bearer, DRB).

It should be noted that in different systems, the CU (or the CU-CP and the CU-UP) or the DU may have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and an RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used for the terminal device are not limited in embodiments of this application.

The access network device and the UE may be at fixed locations, or may be mobile. The access network device and the UE may be deployed on land, including indoor, outdoor, handheld, or vehicle-mounted; may be deployed on a water surface; or may be deployed on an airplane, a balloon, or an artificial satellite in the air. This is not limited in embodiments of this application. Communication between the access network device and the UE, between access network devices, or between UEs may be performed by using a licensed spectrum, an unlicensed spectrum, or both the licensed spectrum and the unlicensed spectrum. Communication may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, functions of the access network device may alternatively be executed by a module (for example, a chip) in the access network device, or may be executed by a control subsystem including functions of the access network device. The control subsystem including the functions of the access network device herein may be a control center in the foregoing application scenarios such as the smart grid, the industrial control, the smart transportation, and the smart city. Functions of the terminal device may alternatively be performed by a module (for example, a chip or a modem) in the terminal device, or may be performed by an apparatus including functions of the terminal device.

In this application, the access network device sends a downlink signal/information/data to the terminal device, where the downlink information/data may be carried on but is not limited to a downlink channel; and the terminal device sends an uplink signal/information/data to the access network device, where the uplink information/data may be carried on but is not limited to an uplink channel. To communicate with the access network device, the terminal device needs to establish a wireless connection to a cell managed (controlled) by the access network device. The cell to which the terminal device establishes the wireless connection is referred to as a serving cell of the terminal device.

The following describes the technical solutions of this application with reference to specific embodiments.

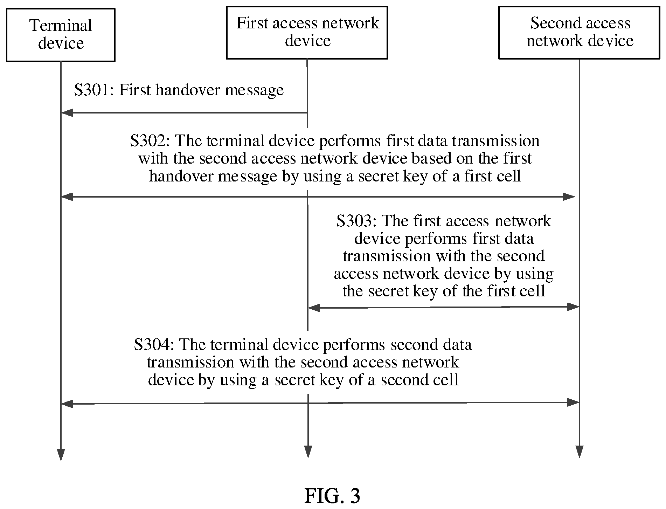

An embodiment of this application provides a communication method. The method is applicable to but is not limited to the communication system shown in FIG. 1A and FIG. 1B. The method may be performed by a terminal device, a first access network device, or a second access network device; the method may be performed by a component (a module, a chip, or the like) corresponding to the terminal device, the first access network device, or the second access network device; or the method may be performed by an apparatus that is used in a matching manner with the corresponding terminal device, first access network device, and second access network device. Specific forms and quantities corresponding to the terminal device, the first access network device, and the second access network device are not specifically limited in embodiments of this application. With reference to FIG. 3, a specific procedure of the method is shown below.

S301: A first access network device sends a first handover message to a terminal device, where the first handover message indicates the terminal device to switch, to a second cell, from a first cell in which the terminal device is currently located, and the second cell is a cell managed by a second access network device. Correspondingly, the terminal device receives the first handover message from the first access network device.

In this embodiment of this application, the first cell is a cell that has been currently accessed by the terminal device, and the terminal device communicates with the first access network device (for example, a base station) via the first cell. The second cell is a cell that is not currently accessed by the terminal device and that is to be accessed by the terminal device. The terminal device may communicate with the second access network device by accessing the second cell.

Optionally, the first handover message includes cell configuration indication information, and the cell configuration indication information indicates that the second cell uses same configuration information as the first cell (in other words, configuration information of the first cell).

In an implementation, before the first access network device sends the first handover message to the terminal device, the method further includes: The first access network device sends first handover request information to the second access network device, where the first handover request information includes address information of a user plane tunnel of the first access network device. In this way, the second access network device may obtain the address information of the user plane tunnel of the first access network device by using the received first handover request information, so that data transmission with the first access network device can be accurately performed subsequently based on the address information of the user plane tunnel of the first access network device.

Correspondingly, after receiving the first handover request information, the second access network device sends first handover response information to the first access network device, where the first handover response information includes address information of a user plane tunnel of the second access network device. In this way, the first access network device may obtain the address information of the user plane tunnel of the second access network device by using the received first handover response information, so that data transmission with the second access network device can be accurately performed subsequently based on the address information of the user plane tunnel of the second access network device.

In this embodiment of this application, the address information of the user plane tunnel of the first access network device or the second access network device may include address information of an uplink user plane tunnel and/or address information of a downlink user plane tunnel. For example, the address information of the user plane tunnel includes a transport layer address and a tunnel termination point identifier of a general packet radio service GPRS tunneling protocol (GPRS tunneling protocol, GTP).

In an implementation, the first handover request information carries a secret key of the second cell and configuration information of the secret key of the second cell, and the first handover response information fed back by the second access network device to the first access network device also carries the configuration information of the secret key of the second cell. After receiving the first handover response information, the first access network device includes the configuration information of the secret key of the second cell in the first handover message, and sends the first handover message to the terminal device, so that the terminal device can subsequently derive the secret key of the second cell. In this implementation, the first access network device generates the configuration information of the secret key of the second cell, derives the secret key of the second cell, and then sends the secret key of the second cell and the configuration information of the secret key of the second cell to the second access network device, for use and transmission in a subsequent step.

In a possible implementation, the first handover request information further includes third indication information, and the third indication information is used to request the second cell to use the configuration information of the first cell. Correspondingly, the first handover response information may indicate that the second cell acknowledges to use the configuration information of the first cell. The configuration information of the first cell may include, but is not limited to, uplink or downlink physical layer channel configuration information of the first cell, for example, frequency domain bandwidth or a cell radio network temporary identifier (cell radio network temporary identifier, C-RNTI).

Through interaction between the first access network device and the second access network device, the second cell and the first cell can use the same configuration information, so that the terminal device can accurately and quickly access the second cell subsequently.

S302: The terminal device performs first data transmission with the second access network device based on the first handover message by using a secret key of the first cell.

In this embodiment of this application, the secret key of the first cell may be derived based on configuration information of the secret key of the first cell.

In a possible implementation, that the terminal device performs first data transmission with the second access network device by using the secret key of the first cell may include: When a communication connection to the second cell is established, and the secret key of the second cell is not derived, the terminal device performs first data transmission with the second access network device by using the secret key of the first cell.

In a possible implementation, if the first handover request information does not carry the secret key of the second cell and the configuration information of the secret key of the second cell (in other words, the secret key of the second cell and the configuration information of the secret key of the second cell are not generated and derived by the first access network device), the first handover response information and the first handover message do not carry the configuration information of the secret key of the second cell either. In this case, after establishing the communication connection to the second cell, the terminal device may receive the configuration information of the secret key of the second cell from the second access network device. The configuration information of the secret key of the second cell may be obtained by the second access network device from an access and mobility management function network element in a core network.

In this embodiment of this application, that the terminal device establishes the communication connection to the second cell may include: establishing a bearer (or a logical channel) used for transmission of first data between the terminal device and the second cell and a bearer (or a logical channel) used for transmission of second data between the terminal device and the second cell.

S303: The first access network device performs first data transmission with the second access network device by using the secret key of the first cell.

In an implementation, before the first access network device performs first data transmission with the second access network device by using the secret key of the first cell, the method further includes: The first access network device receives a first response message (for example, an RLC ACK message, a hybrid automatic repeat request (hybrid automatic repeat request, HARQ) acknowledgment (acknowledgement, ACK) message, an RRC message, or a media access control MAC control element (control element, CE)) from the terminal device, where the first response message is used to notify that the terminal device acknowledges to switch from the first cell to the second cell.

In this embodiment of this application, steps S302 and S303 are processes in which three parties (namely, the terminal device, the first access network device, and the second access network device) exchange the first data. Therefore, an execution sequence of steps S302 and S303 is not specifically limited. Specific processes of interaction in S302 in which the terminal device performs first data transmission with the second access network device by using the secret key of the first cell and in S303 in which the first access network device performs first data transmission with the second access network device by using the secret key of the first cell are shown below.

Uplink transmission: In step S302, the terminal device performs encryption and integrity protection processing on uplink data by using the secret key of the first cell, to obtain uplink first data; and sends the uplink first data to the second access network device. Correspondingly, the second access network device receives the uplink first data from the terminal device. In step S303, the second access network device may send the uplink first data to the first access network device based on the address information of the user plane tunnel of the first access network device. Correspondingly, after receiving the uplink first data from the second access network device, the first access network device performs decryption and integrity check processing on the uplink first data by using the secret key of the first cell, to obtain the uplink data.

Downlink transmission: In step S303, the first access network device performs encryption and integrity protection processing on downlink data by using the secret key of the first cell, to obtain downlink first data; and sends the downlink first data to the second access network device based on the address information of the user plane tunnel of the second access network device. In step S302, the second access network device sends the downlink first data to the terminal device. Then, the terminal device performs decryption and integrity check processing on the downlink first data by using the secret key of the first cell, to obtain the downlink data.

In this embodiment of this application, the terminal device, the first access network device, or the second access network device may identify the received first data by using a first target identifier, and identify the received second data by using a second target identifier. The first target identifier may be but is not limited to an identifier of a first bearer, an identifier of a first logical channel, or a first identifier carried in the first data, where the first bearer or the first logical channel is used for transmission of the first data, and the first identifier indicates specific data that belongs to the first data. The second target identifier may be but is not limited to an identifier of a second bearer, an identifier of a second logical channel, or a second identifier carried in the second data, where the second bearer or the second logical channel is used for transmission of the second data, and the second identifier indicates specific data that belongs to the second data.

It should be noted that, in this embodiment of this application, after establishing the communication connection to the second cell, when the secret key of the second cell is not derived, the terminal device may perform uplink transmission and/or downlink transmission.

S304: The terminal device performs second data transmission with the second access network device by using the secret key of the second cell.

In a possible implementation, after deriving the secret key of the second cell, the terminal device performs step S304.

In this embodiment of this application, when the terminal device performs step S304, the following may be specifically included:

The terminal device performs encryption and integrity protection processing on uplink data by using the secret key of the second cell, to obtain uplink second data, and then sends the uplink second data to the second access network device; after receiving the uplink second data from the terminal device, the second access network device performs decryption and integrity check processing on the uplink second data by using the secret key of the second cell, to obtain the uplink data; and further, the second access network device sends the uplink data to a user plane function network element in a core network device; and/or
the second access network device receives downlink data from the user plane function network element in the core network device and/or the first access network device, and then performs encryption and integrity protection processing on the downlink data by using the secret key of the second cell, to obtain downlink second data; further, the second access network device sends the downlink second data to the terminal device; and after receiving the downlink second data from the second access network device, the terminal device may perform decryption and integrity check processing on the downlink second data by using the secret key of the second cell.

In this embodiment of this application, the terminal device or the second access network device may identify the received second data by using the second target identifier. The second target identifier may be but is not limited to the identifier of the second bearer, the identifier of the second logical channel, or the second identifier carried in the second data, where the second bearer or the second logical channel is used for transmission of the second data.

In this embodiment of this application, the second access network device may send path switch request information to the access and mobility management function network element in the core network device after a first event, where the path switch request information is used to request to switch a data transmission path from a corresponding first path between the user plane function network element and the first access network device to a corresponding second path between the user plane function network element and the second access network device, and the first event may be any one of the following:
(1) the second access network device receives the downlink first data from the first access network device; (2) the second access network device receives the uplink first data from the terminal device; and (3) the second access network device receives the uplink second data from the terminal device.
(1) and (2) may be steps in step S303 in which the terminal device performs first data transmission with the first access network device via the second access network device.

In a possible implementation, the method further includes: The second access network device receives path switch response information from the access and mobility management function network element, and obtains the configuration information of the secret key of the second cell from the path switch response information, where the path switch response information indicates that the data transmission path has been switched from the first path to the second path.

After receiving the configuration information of the secret key of the second cell from the core network device (the access and mobility management function network element), the second access network device may further send the configuration information of the secret key of the second cell to the terminal device when the terminal device establishes the communication connection to the second cell, so that the terminal device can effectively and accurately derive the secret key of the second cell based on the configuration information of the secret key of the second cell.

In an implementation, after receiving the path switch response information, the second access network device further performs the following operations: sending first indication information to the terminal device, and sending second indication information to the first access network device.

In the foregoing descriptions, the first indication information indicates the terminal device to perform but is not limited to: stopping using the secret key of the first cell to process data, deleting the secret key of the first cell, stopping processing associated with the secret key of the first cell, releasing the first bearer or the first logical channel of the first data, and stopping including the second identifier in the second data.

The second indication information indicates the first cell or the first access network device to stop generating or sending the first data and release the first bearer or the first logical channel of the first data.

In addition, optionally, after receiving the second indication information sent by the second access network device, the first access network device sends first status information to the second access network device. The first status information indicates identification information, for example, a sequence number, of the first data that has been successfully sent and/or is not successfully sent.

Optionally, the first access network device further sends third data to the second access network device, where the third data is the data that is not successfully sent and on which encryption and integrity protection processing are not performed.

In this embodiment of this application, a payload (payload) of the third data may be the same as a payload payload of the first data that is previously sent by the first access network device but that is not successfully received by the terminal device.

In this embodiment of this application, the first data may be data obtained through encryption and integrity protection processing by using the secret key of the first cell, and the second data may be data obtained through encryption and integrity protection processing by using the secret key of the second cell. In some other embodiments or application scenarios, the first data may alternatively be data obtained through processing by using other privacy information associated with the first cell, and the second data may alternatively be data obtained through processing by using other privacy information associated with the second cell. In this case, the " secret key of the first cell" in this specification may be correspondingly replaced with the other privacy information associated with the first cell, the " secret key of the second cell" may be correspondingly replaced with the other privacy information associated with the second cell, and a secret key derivation process may be correspondingly implemented with reference to a derivation process of the " secret key of the first cell" and the " secret key of the second cell".

Embodiments of this application provide a communication method and apparatus. The method includes: A terminal device receives a first handover message from a first access network device, where the first handover message indicates the terminal device to switch, to a second cell, from a first cell in which the terminal device is currently located, and the second cell is a cell managed by a second access network device. The terminal device performs first data transmission with the second access network device based on the first handover message by using a secret key of the first cell. According to the method, it can be ensured that duration of communication interruption that occurs when the terminal device performs cell switch is short, in other words, the duration of the communication interruption that occurs when the terminal device performs cell switch can be reduced.

According to the communication method shown in FIG. 3, the following further describes several specific embodiments in detail.

### Embodiment 1

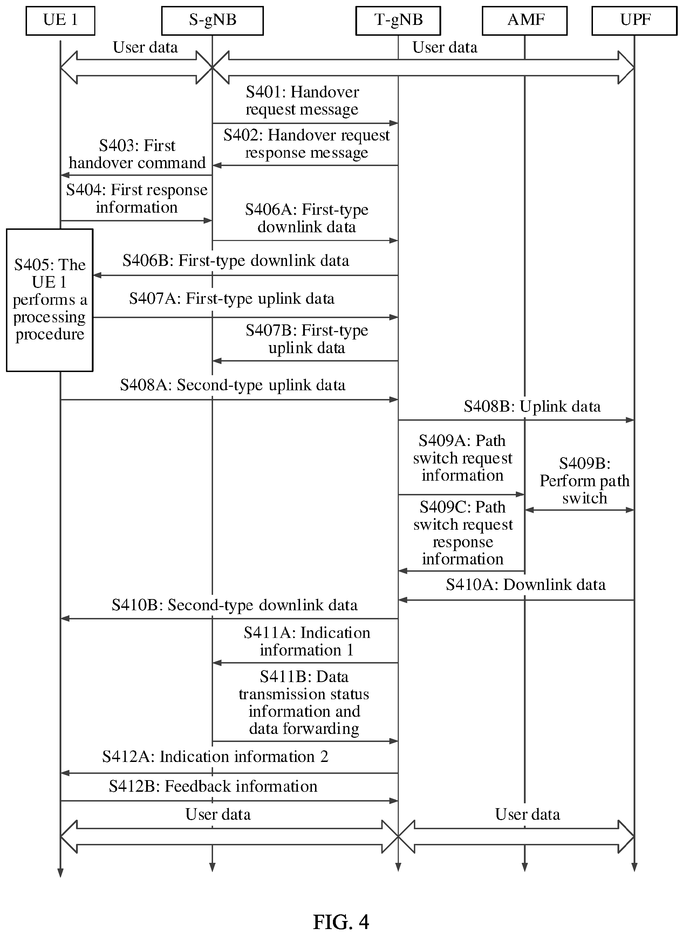

In Embodiment 1, for a scenario in which a UE switches a base station (or the UE switches a cell), a UE 1 is used as an example. The UE 1 switches from a source base station S-gNB (or may be a source cell) to a target base station T-gNB (or may be a target cell). Before switching of the UE 1, user data exchanged between a UPF and the UE 1 (in other words, the UE 1 sends user data to the UPF, and the UPF sends user data to the UE 1) is forwarded via the source base station (S-gNB). After switching of the UE 1, user data exchanged between the UPF and the UE 1 is forwarded via the target base station (T-gNB). In Embodiment 1, communication in a switching process of the UE 1 is mainly described. Refer to FIG. 4. A procedure of Embodiment 1 is shown below.

S401: The S-gNB sends a handover request message to the T-gNB.

Correspondingly, the T-gNB receives the handover request message from the S-gNB. The handover request message includes address information of an uplink user plane tunnel of the S-gNB. In this way, the T-gNB may subsequently send uplink data to the S-gNB based on the address information of the uplink user plane tunnel of the S-gNB. In addition, the handover request message further includes a secret key parameter of the target cell, for example, a next hop chaining count value. The handover request message further includes a secret key of the target cell, and the secret key of the target cell is derived by the S-gNB based on the secret key parameter of the target cell.

The handover request message may also be referred to as a handover preparation message, and is used to request configuration information of the target cell from the T-gNB.

Optionally, the handover request message may further include first configuration information of the source cell, and is used to request the target cell to use configuration information that is the same as the first configuration information.

For example, the handover request message is used to request the target cell to use same physical layer channel configuration information (in other words, uplink physical layer channel configuration information and downlink physical layer channel configuration information) as the source cell, for example, frequency domain bandwidth or a cell radio network temporary identifier C-RNTI.

In this embodiment of this application, the first configuration information is various types of configuration information that can be repeatedly used by the UE 1 in different cells (for example, the source cell and the target cell), and includes but is not limited to the foregoing physical channel configuration information. However, the source cell and the target cell usually cannot use same information such as a cell identifier or a secret key. Therefore, the information such as the cell identifier or the secret key is not in a scope of the first configuration information.

In the foregoing descriptions, the source cell is a cell managed (or managed/controlled) by the S-gNB, and the UE 1 currently accesses the source cell, and communicates with the S-gNB via the source cell. The target cell is a cell managed (or managed/controlled) by the T-gNB. In this case, the UE 1 has not accessed the target cell, and the UE 1 is to subsequently communicate with the T-gNB via the target cell.

In this embodiment of this application, when the UE 1 switches the base station (or the cell), if the S-gNB has provided a plurality of candidate cells and configuration information of the plurality of candidate cells for the UE 1 in advance, the target cell may be one of the plurality of candidate cells. If the S-gNB does not provide a plurality of candidate cells for the UE 1 in advance, the target cell is a cell that is temporarily determined by the S-gNB for the UE 1 and that can be accessed. Therefore, this embodiment is applicable to a scenario in which the plurality of candidate cells are pre-configured for the UE 1, and is also applicable to a scenario in which the plurality of candidate cells are not pre-configured for the UE 1.

S402: The T-gNB sends a handover request response message to the S-gNB.

Correspondingly, the S-gNB receives the handover request response message from the T-gNB. The handover request response message includes address information of a downlink user plane tunnel of the T-gNB. In this way, the S-gNB may subsequently send downlink data to the T-gNB based on the address information of the downlink user plane tunnel of the T-gNB.

For example, the address information of the user plane tunnel in S401 and S402 may be address information of an Xn-U user plane tunnel, or may be address information of an F1-U user plane tunnel. An Xn interface is a name of an interface between gNBs, and an F1 interface is a name of an interface between a CU and a DU in a CU-DU split architecture.

The handover request response message further includes the configuration information that is of the target cell and into which the secret key parameter of the target cell is encapsulated.

If the target cell uses the same first configuration information as the source cell, the configuration information of the target cell does not include the first configuration information. If the target cell does not use the same first configuration information as the source cell, the configuration information of the target cell includes the first configuration information.

For example, the secret key parameter of the target cell may be the next hop chaining count (next hop chaining count, NCC) value.

Optionally, the handover request response message includes indication information 0, and the indication information 0 indicates whether the target cell agrees to use the same first configuration information as the source cell.

If the target cell does not agree to use the same first configuration information as the source cell, when an S-gNB side does not provide the configuration information of the plurality of candidate cells (including the target cell) for the UE 1 in advance, the configuration information that is of the target cell and that is carried in the handover request response message further includes the first configuration information.

S403: The S-gNB sends a first handover command to the UE 1, where the first handover command is used to request the UE 1 to switch from the source cell to the target cell.

Correspondingly, the UE 1 receives, via the source cell, the first handover command sent by the S-gNB. The first handover command includes the secret key parameter of the target cell.

After receiving the first handover command, when no connection is established to the target cell, the UE 1 does not perform PDCP re-establishment, but reserves a secret key of the source cell. In addition, after the UE 1 receives the first handover command, when the UE 1 subsequently sends data, a bearer (or a logical channel) corresponding to the data carries an identifier that may indicate a type of the data, or the sent data carries identification information that may indicate the type of the data.

Optionally, the first handover command carries configuration indication information, and the configuration indication information indicates that the target cell uses the same first configuration information as the source cell. Corresponding to S402, if the target cell does not use the same first configuration information as the source cell, and the S-gNB does not provide the configuration information of the plurality of candidate cells (including the target cell) for the UE 1 in advance, the first handover command may carry the configuration information of the target cell.

In this embodiment of this application, after receiving the first handover command, the UE 1 may perform the following step S404 and step S405.

S404: The UE 1 sends a first response message to the S-gNB.

The first response message is used to notify the S-gNB that the UE 1 accepts to switch from the source cell to the target cell, or notify the S-gNB that the UE 1 has received the first handover command. This is not limited in this embodiment of this application. The first response message may be an RLC ACK message, a HARQ ACK message, an RRC message, a MAC CE, or the like.

After receiving the first response message sent by the UE 1, the S-gNB suspends communication with the UE 1 through an air interface communication link of the source cell.

S405: The UE 1 performs a processing procedure based on the handover command.

In step S405, the processing procedure performed by the UE 1 may specifically include but is not limited to one or more of the following steps:
(1) The UE 1 establishes a connection to the target cell.
(2) Make the configuration information of the target cell take effect.

If the target cell uses same configuration information (in other words, the first configuration information) as the source cell, in step (2), the UE 1 may maintain the first configuration information of the source cell. If the target cell does not use same configuration information (in other words, the first configuration information) as the source cell, in step (2), the UE 1 may make the configuration information of the target cell take effect.

(3) Perform baseband adjustment for the target cell.

(4) Perform radio frequency unit adjustment for the target cell.

(5) Derive the secret key of the target cell.

(6) Use the secret key of the target cell to perform encryption and integrity protection on data.

In the foregoing descriptions, the step of establishing the connection to the target cell by the UE 1 may include establishing a bearer/logical channel used for data transmission between the UE 1 and the target cell, or may include establishing an air interface link, for example, establishing an air interface connection to the target cell for random access or random access-free.

When the target cell acknowledges to use the same first configuration information as the source cell, the UE 1 maintains a hardware processing procedure corresponding to the first configuration information, for example, maintains baseband processing and maintains radio frequency unit processing. This helps the UE 1 quickly complete establishment of the connection to the target cell.

Usually, steps (1) to (4) are performed before, and steps (5) and (6) are performed later. In addition, steps (5) and (6) are equivalent to a process in which the UE 1 performs PDCP re-establishment. A sequence of performing steps (1) to (4) is not specifically limited in this embodiment of this application.

After steps related to establishing the connection to the target cell by the UE 1 in S405 are completed, the following S406A and S406B and/or S407A and S407B may be performed.

S406A: The S-gNB sends first-type downlink data to the T-gNB.

The S-gNB may send the first-type downlink data to the T-gNB based on the address information that is of the downlink user plane tunnel of the T-gNB and that is obtained in S402 (the first-type downlink data may be equivalent to the downlink first data in the solution in FIG. 3). The first-type downlink data is a data packet obtained by the S-gNB through encryption and integrity protection processing by using the secret key of the source cell, for example, a PDCP protocol data unit (protocol data unit, PDU) obtained through processing by using the secret key of the source cell.

In this embodiment, if transmission of the first-type downlink data may be performed through a bearer (or a logical channel) whose identifier is 1, in S405, in the step of establishing the connection to the target cell by the UE 1, the bearer (or the logical channel) corresponding to the identifier 1 may be established.

In S406A, the S-gNB sends the first-type downlink data to the T-gNB through the bearer (or the logical channel) corresponding to the identifier 1, and the T-gNB may identify (determine), based on the identifier 1 corresponding to the bearer (or the logical channel) that receives the first-type downlink data, that the first-type downlink data is first-type data, and then choose to send the first-type downlink data to the UE 1.

In some other embodiments, the first-type downlink data sent by the S-gNB carries identification information 1, and the identification information 1 identifies (or represents) the first-type data.

For example, the S-gNB adds one identifier 1 to a header of a downlink data packet sent to the T-gNB, for example, adds the identifier 1 to a PDCP packet header, an RLC packet header, or a MAC packet header, where the identifier 1 represents the first-type data. Therefore, after receiving the downlink data packet, the T-gNB may read the identifier 1 from the downlink data packet, to determine that the downlink data packet is the first-type data. Then, the T-gNB sends the downlink data to the UE 1.

S406B: The T-gNB sends the first-type downlink data to the UE 1.

Correspondingly, the UE 1 receives, from the T-gNB, the first-type downlink data from the S-gNB. The UE 1 may identify (determine), based on the identifier 1 corresponding to the bearer (or the logical channel) that receives the first-type downlink data, or based on the identification information 1 carried in the first-type downlink data, that the first-type downlink data is the first-type data. Then, the UE 1 chooses to perform decryption and integrity check processing on the first-type downlink data by using the secret key of the source cell.

S407A: The UE 1 sends first-type uplink data to the T-gNB.

For example, the UE 1 sends the first-type uplink data to the T-gNB through an air interface communication link of the target cell (the first-type uplink data may be equivalent to the uplink first data in the solution in FIG. 3). The first-type uplink data is a data packet obtained by the UE 1 through encryption and integrity protection processing by using the secret key of the source cell, for example, a PDCP PDU.

Similar to the descriptions in S406A, in this embodiment, transmission of the first-type data may be performed through the bearer (or the logical channel) whose identifier is 1. In S407A, the UE 1 sends the first-type uplink data to the T-gNB through the bearer (or the logical channel) corresponding to the identifier 1, and the T-gNB may identify (determine), based on the identifier 1 corresponding to the bearer (or the logical channel) that receives the first-type uplink data, that the first-type uplink data is the first-type data, and then choose to send the first-type uplink data to the S-gNB.

In some other embodiments, the first-type uplink data sent by the UE 1 carries the identification information 1, and the identification information 1 identifies (or represents) the first-type data.

For example, the UE 1 adds one identifier 1 to a header of an uplink data packet sent to the T-gNB, for example, adds the identifier 1 to a PDCP packet header, an RLC packet header, or a MAC packet header, where the identifier 1 represents the first-type data. Therefore, after receiving the uplink data packet, the T-gNB may read the identifier 1 from the uplink data packet, to determine that the uplink data packet is the first-type data. Then, the T-gNB sends the uplink data to the S-gNB.

S407B: The T-gNB sends the first-type uplink data to the S-gNB.

The T-gNB may send the first-type uplink data to the S-gNB based on the address information that is of the uplink user plane tunnel of the S-gNB and that is obtained in S401. Then, the S-gNB may perform decryption and integrity check processing on the first-type uplink data by using the secret key of the source cell. After completing processing on the first-type uplink data, the S-gNB may further send data to the UPF.

Optionally, the UE 1 may send an RLC status report to the S-gNB by using steps S407A and S407B (which is equivalent to that the first-type uplink data is the RLC status report), so that the S-gNB can learn of (perceive) specific data successfully received by the UE 1 and specific data not successfully received by the UE 1 in the following step S411B.

S406A and S406B are that the S-gNB sends the first-type downlink data to the UE 1 via the T-gNB. S407A and S407B are that the UE 1 sends the first-type uplink data to the S-gNB via the T-gNB. In S405, after the step of establishing the connection to the target cell by the UE 1 is completed, S406A and S406B and/or S407A and S407B (which is equivalent to continuing communication between the UE 1 and the S-gNB) may be performed, without waiting until the entire processing procedure in S405 is completed, so that duration of communication interruption caused by performing the processing procedure by the UE 1 can be reduced. In addition, A sequence of performing S406A and S406B (in other words, the step of transmission of the first-type downlink data) and S407A and S407B (in other words, the step of transmission of the first-type downlink data) is not limited.

S408A: The UE 1 sends second-type uplink data to the T-gNB.

After S405 is completed (in other words, after the UE 1 performs the processing procedure), the UE 1 has successfully derived the secret key of the target cell. In this case, the UE 1 may perform encryption and integrity protection processing on to-be-sent uplink data by using the secret key of the target cell, to obtain the second-type uplink data (the second-type uplink data may be equivalent to the uplink second data in the solution in FIG. 3), and send the second-type uplink data to the T-gNB.

Correspondingly, after receiving the second-type uplink data, the T-gNB may perform decryption and integrity check processing on the second-type uplink data by using the secret key of the target cell, to obtain the uplink data (that is, original data).

In this embodiment, if transmission of the second-type uplink data is performed through a bearer (or a logical channel) whose identifier is 2, in S405, the step of establishing the connection to the target cell by the UE 1 may include establishing the bearer (or the logical channel) corresponding to the identifier 2.

In S408A, the UE 1 sends the second-type uplink data to the T-gNB through the bearer (or the logical channel) corresponding to the identifier 2, and the T-gNB may identify (determine), based on the identifier 2 corresponding to the bearer (or the logical channel) that receives the second-type uplink data, that the second-type uplink data is second-type data. Then, in the following S408, after performing decryption and integrity check processing on the second-type uplink data, the T-gNB chooses to send the data to the UPF in a core network.

In some other embodiments, the second-type uplink data sent by the UE 1 carries identification information 2, and the identification information 2 identifies (or represents) the second-type data.

For example, the UE 1 adds one identifier 2 to a header of an uplink data packet sent to the T-gNB, for example, adds the identifier 2 to a PDCP packet header, an RLC packet header, or a MAC packet header, where the identifier 2 represents the second-type data. Therefore, after receiving the uplink data packet from the UE 1, the T-gNB may read the identifier 2 from the uplink data packet, to determine that the uplink data packet is the second-type data. Then, in the following S408B, the T-gNB sends the uplink data to the UPF in the core network.

Optionally, the UE 1 may send an RRC re-configuration complete message (in other words, the RRC re-configuration complete message is equivalent to the second-type uplink data) to the T-gNB by using step S408A, to indicate that the configuration information of the target cell has been successfully applied, including that the UE 1 makes the secret key of the target cell take effect.

S408B: The T-gNB sends the uplink data to the UPF.

The uplink data is data obtained through decryption and integrity check processing on the second-type uplink data from the UE 1.

In S408A and S408B, the UE 1 performs uplink transmission of the second-type data with the T-gNB by using the secret key of the target cell, and then the T-gNB sends the data from the UE 1 to the UPF in the core network.

S409A: The T-gNB sends path switch request information to an AMF.

The path switch request information is used to request a core network device to switch a path of downlink data from a path corresponding to the S-gNB to a path corresponding to the T-gNB. The path corresponding to the S-gNB (which may be equivalent to the first path in the solution in FIG. 3) is a transmission path between the S-gNB and the UPF, and the path corresponding to the T-gNB (which may be equivalent to the second path in the solution in FIG. 3) is a transmission path between the T-gNB and the UPF. For example, the path switch request information is used to request to switch a termination point address of the downlink user plane tunnel from an address of the S-gNB to an address of the T-gNB.

In this embodiment of this application, step S409A may be performed after step S408A. In other words, after receiving the second-type uplink data sent by the UE 1, the T-gNB may learn that the UE 1 has completed the processing procedure in step S405. In this case, the UE 1 may send the path switch request information to the AMF in the core network. S408B and S409A are both performed after S408A, but a sequence of performing S408B and S409A is not specifically limited.

In this case: In an implementation, step S409A may alternatively be performed after S406A. In other words, after the T-gNB receives the first-type downlink data sent by the S-gNB, the T-gNB sends the path switch request information to the AMF in the core network.

In another implementation, step S409A may alternatively be performed after S407A. In other words, after the T-gNB receives the first-type uplink data sent by the UE 1, the T-gNB sends the path switch request information to the AMF in the core network.

S409B: Perform path switch between the AMF and the UPF.

A path switch procedure (process) of the UE 1 is performed between the AMF and the UPF. For details, refer to a conventional technology for implementation. Details are not described herein. It should be understood that the path switch procedure performed between the AMF and the UPF may alternatively involve participation of an SMF.

After S409B, the core network device completes switching of the path of the downlink data, in other words, switches from the path corresponding to the S-gNB to the path corresponding to the T-gNB (in other words, switches from the transmission path between the S-gNB and the UPF to the transmission path between the T-gNB and the UPF).

S409C: The AMF sends path switch response information to the T-gNB.

Correspondingly, the T-gNB receives the path switch response information, where the path switch response information indicates that path switch has been completed.

S410A: The UPF sends downlink data to the T-gNB.

In step S410A, after receiving the downlink data (original data that is not encrypted) from the UPF, the T-gNB may perform encryption and integrity protection processing on the downlink data by using the secret key of the target cell, to obtain second-type downlink data.

S410B: The T-gNB sends the second-type downlink data to the UE 1.

Correspondingly, the UE 1 may receive, via the target cell, the second-type downlink data sent by the T-gNB (the second-type downlink data may be equivalent to the downlink second data in the solution in FIG. 3). The UE 1 may identify (determine), based on the identifier 2 corresponding to the bearer (or the logical channel) that receives the second-type downlink data, or based on the identification information 2 carried in the second-type downlink data, that the second-type downlink data is the second-type data. Then, the UE 1 chooses to perform decryption and integrity check processing on the second-type downlink data by using the secret key of the target cell.

In this case, the UE 1 has derived the secret key of the target cell, and path switch has been completed. Therefore, in step S410B, the UE 1 may further perform decryption and integrity check processing on the second-type downlink data by using the secret key of the target cell, to obtain the original data.

S411A: The T-gNB sends indication information 1 to the S-gNB.

Correspondingly, the S-gNB receives the indication information 1 from the T-gNB.

The indication information 1 indicates the S-gNB to stop generating the first-type downlink data and stop sending the first-type downlink data.

In this embodiment, transmission of the first-type uplink data/downlink data is performed through the bearer (or the logical channel) corresponding to the identifier 1. Therefore, the S-gNB further releases, based on the indication information 1, the bearer (or the logical channel) corresponding to the identifier 1.

S411B: The S-gNB sends data transmission status information and forwards data to the T-gNB.

The data transmission status information is used to notify a sequence number (or an ID) of a data packet that has been successfully sent and/or is not successfully sent. For example, a sent sequence number status transfer message indicates a receiving status of an uplink data sequence number and a sending status of a downlink data sequence number.

Optionally, the S-gNB sends, to the target gNB, the downlink data packet that is not successfully sent (that is, an original data packet on which encryption and integrity protection processing are not performed), for example, a PDCP service data unit (service data unit, SDU). In this manner, the target gNB may continue to send, to the UE 1, the data packet that is not successfully sent and that is from the S-gNB. For uplink data packets, the S-gNB may deliver, to the UPF, data packets on which sorting is completed (for example, data packet sequence numbers 1, 2, and 3 whose numbers are increased by 1 in sequence), and send, to the T-gNB, data packets on which sorting is not completed (for example, data packet sequence numbers 6, 7, and 9 with sequence number holes), and the T-gNB then delivers, to the UPF, data packets after sorting is completed (in other words, after the sequence number holes are filled).

S412A: The T-gNB sends indication information 2 to the UE 1.

Correspondingly, the UE 1 receives the indication information 2 from the T-gNB.

The indication information 2 may indicate the UE 1 to stop using the secret key of the source cell to process data, and stop a processing operation related to the secret key of the source cell, and may further indicate the UE 1 to delete the secret key of the source cell.

In this embodiment, transmission of the first-type uplink data/downlink data is performed through the bearer (or the logical channel) corresponding to the identifier 1. Therefore, the UE 1 may further release, based on the indication information 2, the bearer (or the logical channel) corresponding to the identifier 1.

In addition, after receiving the indication information 2, the UE 1 no longer includes a related identifier of the first-type data (the related identifier of the first-type data is equivalent to the first target identifier in the solution in FIG. 3) in a data packet, for example, the identifier 1 of the bearer 1, the identifier 1 of the logical channel 1, and the identifier 1, and no longer includes a related identifier of the second-type data (the related identifier of the second-type data is equivalent to the second target identifier in the solution in FIG. 3) in a data packet, for example, the identifier 2 of the bearer 2, the identifier 2 of the logical channel 2, and the identifier 2.

In this embodiment of this application, S411A and S412A may be performed synchronously, or may not be performed synchronously, and an execution sequence is not specifically limited.

S412B: The UE 1 sends feedback information to the T-gNB.

The feedback information is used to notify the T-gNB that the UE 1 has successfully received the indication information 2.

After S411B and/or S412B (in other words, when the status information and the data that are fed back by the S-gNB are received, the feedback information of the UE 1 is received, or the data transmission status information and the data that are fed back by the S-gNB and the feedback information of the UE 1 are received), the T-gNB may no longer includes the related identifier (for example, the identifier 1 of the bearer 1, the identifier of the logical channel 1, and the identifier 1) of the first-type data in the data packet, and no longer includes the related identifier (for example, the identifier 2 of the bearer 2, the identifier 2 of the logical channel 2, and the identifier 2) of the second-type data in the data packet.

In Embodiment 1, the UE 1 is used as an example. For the scenario in which the UE 1 switches the base station (or the UE switches the cell), in a switching processing process of the UE 1 (including the processing procedure performed by the UE 1 and the path switch procedure between the target base station and the core network), the UE 1 may maintain data transmission with the source base station through the air interface link of the target base station, to effectively reduce duration of communication interruption caused by switching of the UE 1.

### Embodiment 2

Based on the CU-DU split architecture shown in FIG. 2, one base station may be logically divided into one central unit CU and one or more distributed units DUs. Each DU is connected to the CU through an F1 logical interface. Operations related to a radio link control RLC layer, a media access control MAC layer, and a physical layer PHY layer are processed by the DU, and operations related to a service data adaptation protocol SDAP layer, a radio resource control RRC layer, and a packet data convergence protocol PDCP layer are processed by the CU.

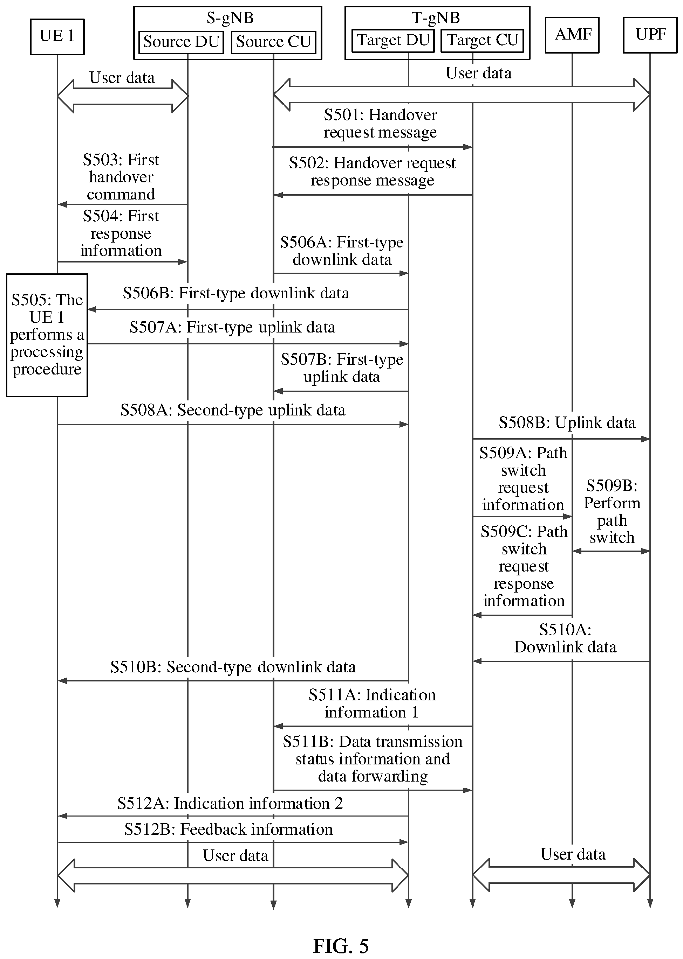

In Embodiment 2, specifically, a source base station (S-gNB) is divided into an S-gNB-CU (referred to as a source CU below) and an S-gNB-DU (referred to as a source DU below), and a target base station (T-gNB) is divided into a T-gNB-CU (referred to as a target CU below) and a T-gNB-DU (referred to as a target DU below). For specific implementations of steps (S501 to S512B) in Embodiment 2, refer to specific implementations of steps (S401 to S412B) in Embodiment 1 in one-to-one correspondence. Details are not described herein again. The steps shown in Embodiment 2 may be detailed descriptions of information exchange in the solution in Embodiment 1. As shown in FIG. 5, a procedure of Embodiment 2 is shown below.

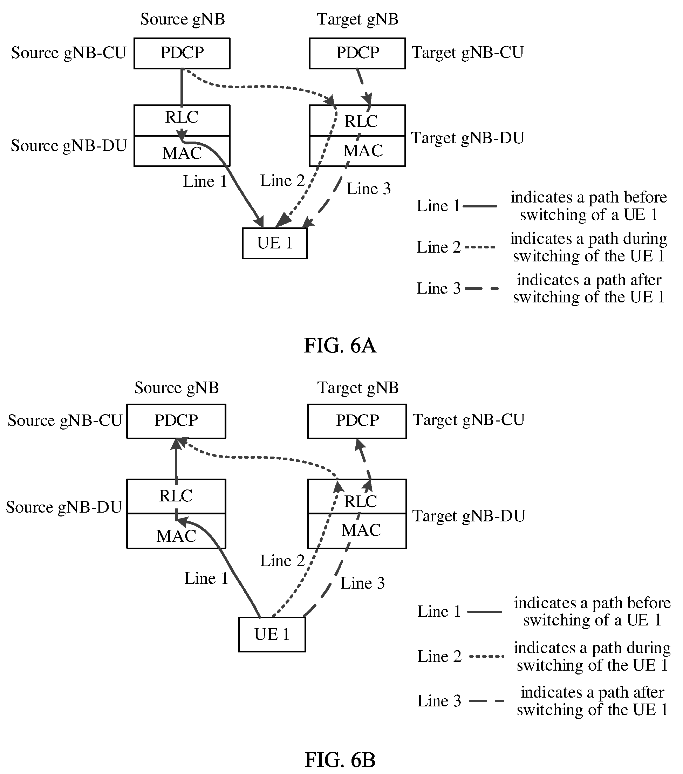

Specifically, for a specific downlink transmission path in this embodiment, refer to FIG. 6A. For a specific uplink transmission path in this embodiment, refer to FIG. 6B. A path corresponding to a line 1 represents a transmission path before switching of a UE 1, a line 2 represents a transmission path during switching of the UE 1, and a line 3 represents a transmission path after switching of the UE 1.

S501: The source CU (S-gNB-CU) sends a handover request message to the target CU (T-gNB-CU).

It should be understood that, after receiving the handover request message, the target CU sends related information in the handover request message to the target DU through an F1 interface. For example, the target CU sends first configuration information of a source cell to the target DU, and requests the target DU to use configuration information that is the same as the first configuration information. A process of interaction between the target CU and the target DU is omitted in the figure.

S502: The target CU (T-gNB-CU) sends a handover request response message to the source CU (S-gNB-CU).

S503: The source DU (S-gNB-DU) sends a first handover command to the UE 1, where the first handover command is used to request the UE 1 to switch from the source cell to a target cell.

The first handover command may be an RRC message. In this case, the first handover command is sent by the source CU to the source DU, and is further sent by the source DU to the UE 1. The first handover command may alternatively be a MAC CE or a downlink control information (downlink control information, DCI) message. In this case, the first handover command is generated by the source DU and sent to the UE 1. A process of interaction between the source CU and the source DU is omitted in the figure.

S504: The UE 1 sends a first response message to the source DU (S-gNB-DU).

Optionally, the source DU further sends the first response message to the source CU. A process of interaction between the source CU and the source DU is omitted in the figure.

S505: The UE 1 performs a processing procedure based on the handover command.

S506A: The source CU (S-gNB-CU) sends first-type downlink data to the target DU (T-gNB-DU).

It should be understood that, in a possible network deployment, if there is no direct communication connection between the source CU and the target DU, the first-type downlink data may alternatively be sent through forwarding by the target CU. In other words, the source CU sends the first-type downlink data to the target CU, and the target CU further sends the first-type downlink data to the target DU.

S506B: The target DU (T-gNB-DU) sends the first-type downlink data to the UE 1.

For a specific transmission path corresponding to steps S506A and S506B, refer to the path shown by the line 2 in FIG. 6A to perform transmission of the first-type downlink data.

S507A: The UE 1 sends first-type uplink data to the target DU (T-gNB-DU).

S507B: The target DU (T-gNB-DU) sends the first-type uplink data to the source CU (S-gNB-CU).

It should be understood that, in a possible network deployment, if there is no direct communication connection between the source CU and the target DU, the first-type uplink data may alternatively be sent through forwarding by the target CU. In other words, the target DU sends the first-type uplink data to the target CU, and the target CU further sends the first-type uplink data to the source U.

For a specific transmission path corresponding to steps S507A and S507B, refer to the path shown by the line 2 in FIG. 6B to perform transmission of the first-type uplink data.

S508A: The UE 1 sends second-type uplink data to the target DU (T-gNB-DU).

Further, the target DU sends the uplink data to the target CU through the F1 interface. This step is not shown in FIG. 5.

S508B: The target CU (T-gNB-CU) sends uplink data to a UPF.

In step S508A, for a specific transmission path for sending the second-type uplink data by the UE 1 to the T-gNB, refer to the path shown by the line 3 in FIG. 6B.

S509A: The target CU (T-gNB-CU) sends path switch request information to an AMF.

S509B: Perform path switch between the AMF and the UPF.

S509C: The AMF sends path switch response information to the target CU (T-gNB-CU).

S510A: The UPF sends downlink data to the target CU (T-gNB-CU).

Further, the target CU sends the downlink data to the target DU through the F1 interface. This step is not shown in FIG. 5.

S510B: The target DU (T-gNB-DU) sends second-type downlink data to the UE 1.

In step S510B, for a specific transmission path for sending the second-type downlink data by the T-gNB to the UE 1, refer to the path shown by the line 3 in FIG. 6A.

S511A: The target CU (T-gNB-CU) sends indication information 1 to the source CU (S-gNB-CU).

S511B: The source CU (S-gNB-CU) sends data transmission status information and forwards data to the target CU (T-gNB-CU).

S512A: The target DU (T-gNB-DU) sends indication information 2 to the UE 1.

The indication information 2 may be an RRC message. In this case, the indication information 2 is sent by the target CU to the target DU, and is further sent by the target DU to the UE 1. Alternatively, the first handover command may be a MAC CE or a DCI message. In this case, the first handover command is generated by the target DU and sent to the UE 1. A process of interaction between the target CU and the target DU is omitted in the figure.

S512B: The UE 1 sends feedback information to the target DU (T-gNB-DU).

### Embodiment 3

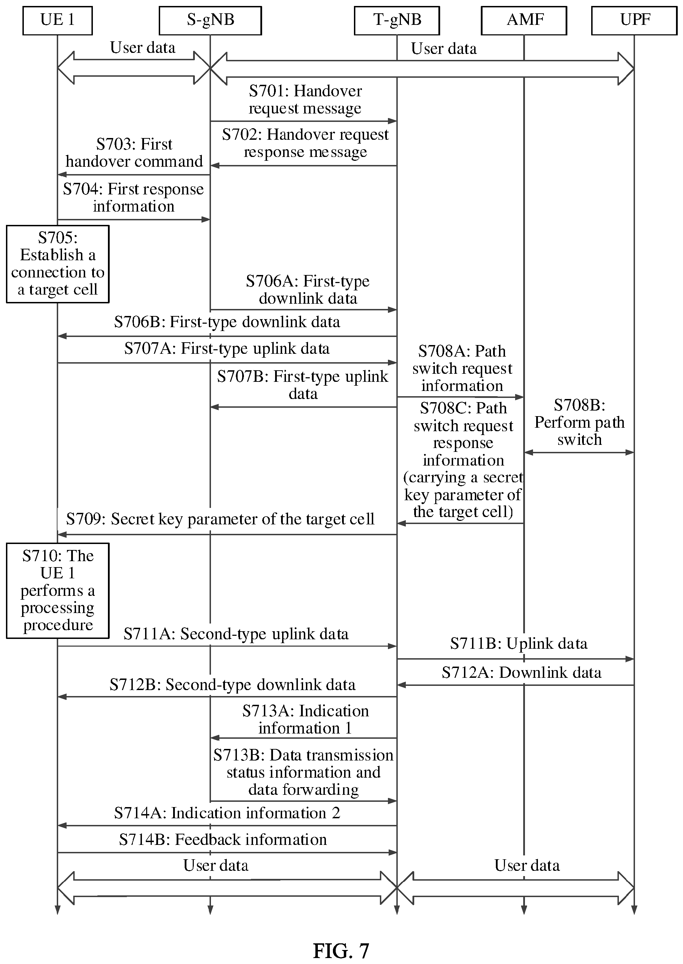

A difference between Embodiment 3 and Embodiment 1 lies in that: After a UE 1 accesses a target cell through an air interface link of the target cell, a target base station may obtain a secret key parameter of the target cell from an AMF in a core network, and deliver the secret key parameter of the target cell to the UE 1. As shown in FIG. 7, a procedure of Embodiment 3 is shown below.

For specific implementations of steps S701 to S704, refer to specific implementations of steps S401 to S404 in Embodiment 1 in one-to-one correspondence. Details are not described herein again.

However, different from step S401, a handover request message in step S701 does not include a secret key that is of the target cell and that is derived by a source cell or the secret key parameter of the target cell. Different from step S402, a handover request response message in step S702 does not include the secret key parameter of the target cell. Different from step S403, a first handover command in step S703 does not include the secret key parameter of the target cell.

S705: The UE 1 establishes a connection to the target cell.

In step S705, one or more of the following several steps may be specifically performed:
(1) The UE 1 establishes the connection to the target cell.
(2) Make configuration information of the target cell take effect.

If the target cell uses same configuration information (for example, first configuration information) as the source cell, in this step, the UE 1 may maintain the configuration information of the source cell. If the target cell does not agree to use same configuration information as the source cell, in this step, the UE 1 may make the configuration information of the target cell take effect.

(3) Perform baseband adjustment for the target cell.

(4) Perform radio frequency unit adjustment for the target cell.

In this step, the UE 1 successfully accesses the target cell, and may then perform the following steps S706A and S706B and/or S707A and S707B.

S706A: An S-gNB sends first-type downlink data to a T-gNB.

S706B: The T-gNB sends the first-type downlink data to the UE 1.

For specific implementations of steps S706A and S706B, refer to specific implementations of steps S406A and S406B in one-to-one correspondence. Details are not described herein again.

S707A: The UE 1 sends first-type uplink data to the T-gNB.

S707B: The T-gNB sends the first-type uplink data to the S-gNB.

For specific implementations of steps S707A and S707B, refer to specific implementations of steps S407A and S407B in one-to-one correspondence. Details are not described herein again.

In S707A, after receiving the first-type uplink data, the T-gNB may perform S708A.

Optionally, the T-gNB may alternatively perform S708A after S706A. In other words, after receiving the first-type downlink data sent by the S-gNB, the T-gNB sends path switch request information to the AMF.

S708A: The T-gNB sends the path switch request information to an AMF.

S708B: Perform path switch between the AMF and a UPF.

S708C: The AMF sends path switch response information to the T-gNB.

For specific implementations of steps S708A to S708C, refer to specific implementations of steps S409A to S409C in one-to-one correspondence. Details are not described herein again.

However, different from S409C, the path switch request response information in step S708C carries the secret key parameter of the target cell, where the secret key parameter may specifically include a secret key parameter 1 and a secret key parameter 2. The secret key parameter 1 is sent to the UE 1, for the UE 1 to derive the secret key of the target cell. The secret key parameter 2 is used by a network device to which the target cell belongs, to derive the secret key of the target cell.

In a process of performing path switch between the AMF and the UPF (which may include steps S708A to S708C), the UE 1 may perform first-type data transmission with the S-gNB via the T-gNB by using a secret key of the source cell with reference to steps S706A and S706B and/or S707A and S707B. Details are not described herein again.

S709: The T-gNB sends the secret key parameter of the target cell to the UE 1.

After receiving the secret key parameter of the target cell (for example, the secret key parameter 1 in S708C), the UE 1 may perform the following secret key derivation process of the target cell in S710.

S710: The UE 1 performs a processing procedure based on the handover command.

Specifically, in step S710, the UE 1 performs derivation of the secret key of the target cell and encryption and integrity protection processing on data by using the secret key of the target cell. For implementation, refer to (5) and (6) in S405. Steps (5) and (6) are equivalent to a process in which the UE 1 performs PDCP re-establishment. However, different from S405, step S710 does not include steps related to establishing the connection to the target cell by the UE 1 (for example, steps (1) to (4) in S405), and the steps related to establishing the connection to the target cell by the UE 1 are completed in S705.

After S710, the UE 1 may derive the secret key of the target cell, and may then perform second-type data transmission with the T-gNB by using the secret key of the target cell.

S711A: The UE 1 sends second-type uplink data to the T-gNB.

S711B: The T-gNB sends uplink data to the UPF.

For specific implementations of steps S711A and S711B, refer to specific implementations of steps S408A and S408B in one-to-one correspondence. Details are not described herein again.

S712A: The UPF sends downlink data to the T-gNB.

S712B: The T-gNB sends second-type downlink data to the UE 1.

For specific implementations of steps S712A and S712B, refer to specific implementations of steps S410A and S410B in one-to-one correspondence. Details are not described herein again.

S713A: The T-gNB sends indication information 1 to the S-gNB.

S713B: The S-gNB sends data transmission status information and forwards data to the T-gNB.

For specific implementations of steps S713A and S713B, refer to specific implementations of steps S411A and S411B in one-to-one correspondence. Details are not described herein again.

S714A: The T-gNB sends indication information 2 to the UE 1.

S714B: The UE 1 sends feedback information to the T-gNB.

For specific implementations of steps S714A and S714B, refer to specific implementations of steps S412A and S412B. Details are not described herein again.

In the solution in Embodiment 1, the secret key parameter that is of the target cell and that is obtained by the target base station is provided by a source base station, and the source base station includes the secret key parameter of the target cell in the first handover command, and sends the first handover command to the UE 1. Therefore, the source base station can learn of the secret key parameter of the target cell, and further learn of the secret key of the target cell. In Embodiment 3, the target base station may directly obtain a new secret key parameter of the target cell from the AMF, so that a security risk can be effectively avoided.

It should be noted that the solution in Embodiment 3 may alternatively be applied to the CU-DU split architecture shown in FIG. 2. For a specific interaction manner, refer to the interaction manner in Embodiment 2 for implementation. Details are not described herein again.

In the foregoing embodiments provided in this application, the method provided in embodiments of this application is separately described from a perspective of interaction between the devices. To implement the functions in the foregoing methods provided in embodiments of this application, the terminal device, the first access network device, or the second access network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely logical function division. In actual implementation, another division manner may be used. In addition, functional modules in embodiments of this application may be integrated into one processor, may exist alone physically, or two or more modules may be integrated into one module. The integrated module may be implemented in a form of hardware, or may be implemented in a form of a software functional module.

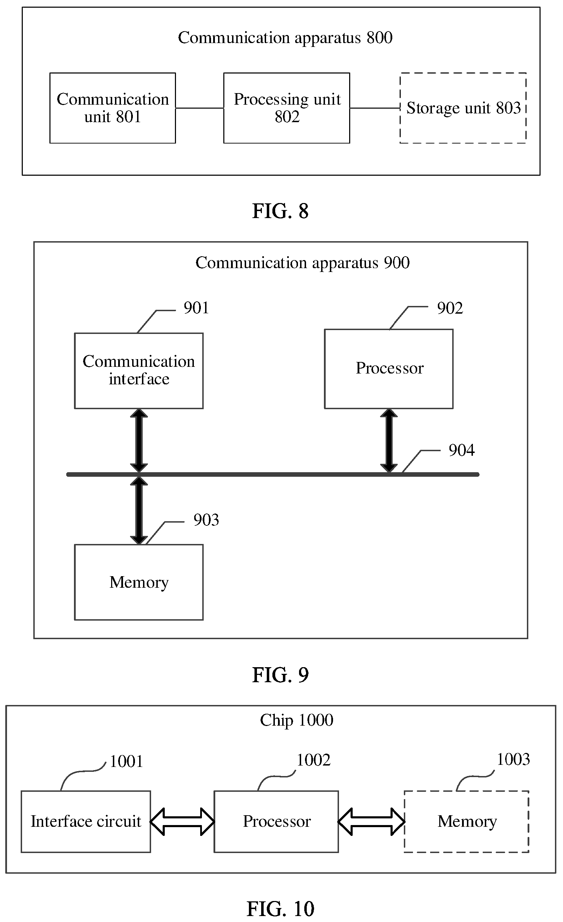

Same as the foregoing concept, as shown in FIG. 8, an embodiment of this application further provides a communication apparatus 800, configured to implement the functions of the terminal device, the first access network device, or the second access network device in the foregoing methods. For example, the communication apparatus 800 may be a software module or a chip system. In this embodiment of this application, the chip system may include a chip, or may include a chip and another discrete device. The communication apparatus 800 may include a communication unit 801 and a processing unit 802.

In this embodiment of this application, the communication unit 801 may also be referred to as a transceiver unit, and may include a sending unit and/or a receiving unit, which are respectively configured to perform sending and receiving steps of the terminal device, the first access network device, or the second access network device in the foregoing method embodiments. The processing unit 802 may be configured to read instructions and/or data in a storage module, to enable the communication apparatus 800 to implement the foregoing method embodiments.

Optionally, the communication apparatus 800 may further include a storage unit 803. The storage unit 803 is equivalent to the storage module, and may be configured to store the instructions and/or the data.

Communication apparatuses provided in embodiments of this application are described below in detail with reference to FIG. 8 and FIG. 9. It should be understood that descriptions of apparatus embodiments correspond to the descriptions of the method embodiments. Therefore, for content that is not described in detail, refer to the foregoing method embodiments in FIG. 3, FIG. 4, FIG. 5, and FIG. 7. For brevity, details are not described herein again.

The communication unit 801 may also be referred to as a transceiver, a transceiver machine, a transceiver apparatus, or the like. The processing unit may also be referred to as a processor, a processing board, a processing module, a processing apparatus, or the like. Optionally, a device that is in the communication unit 801 and that is configured to implement the receiving function may be considered as the receiving unit, and a device that is in the communication unit 801 and that is configured to implement the sending function may be considered as the sending unit. That is, the communication unit 801 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 800 performs functions of the terminal device in the procedure shown in FIG. 3 in the foregoing embodiments,
the communication unit 801 is configured to receive a first handover message from a first access network device, where the first handover message indicates the terminal device to switch, to a second cell, from a first cell in which the terminal device is currently located, and the second cell is a cell managed by a second access network device; and
the processing unit 802 is configured to perform first data transmission with the second access network device based on the first handover message by using a secret key of the first cell.

When the communication apparatus 800 performs functions of the first access network device in the procedure shown in FIG. 3 in the foregoing embodiments,
the communication unit 801 is configured to send a first handover message to a terminal device, where the first handover message indicates the terminal device to switch, to a second cell, from a first cell in which the terminal device is currently located, and the second cell is a cell managed by a second access network device;
the communication unit 801 is further configured to perform first data transmission with the second access network device by using a secret key of the first cell; and
the processing unit 802 is configured to process data and/or information, and the like.

When the communication apparatus 800 performs functions of the second access network device in the procedure shown in FIG. 3 in the foregoing embodiments,
the communication unit 801 is configured to: receive downlink first data from a first access network device, and send the downlink first data to a terminal device; and/or receive uplink first data from the terminal device, and send the uplink first data to the first access network device, where the first data is data obtained through encryption and integrity protection processing by using a secret key of a first cell; and
the processing unit 802 is configured to process data and/or information, and the like.

The foregoing is merely an example. The processing unit 802 and the communication unit 801 may further perform other functions. For more detailed descriptions, refer to related descriptions of the method embodiment shown in FIG. 3. Details are not described herein again.

FIG. 9 shows a communication apparatus 900 according to an embodiment of this application. The communication apparatus shown in FIG. 9 may be an implementation of a hardware circuit of the communication apparatus shown in FIG. 8. The communication apparatus 900 may be used in the foregoing flowchart, and perform functions of the terminal device, the first access network device, or the second access network device in the foregoing method embodiments. For ease of description, FIG. 9 shows only main components of the communication apparatus.

As shown in FIG. 9, the communication apparatus 900 includes a communication interface 901 and a processor 902. The communication interface 901 and the processor 902 are coupled to each other. It may be understood that the communication interface 901 may be a transceiver or an input/output interface, or may be an interface circuit like a transceiver circuit. Optionally, the communication apparatus 900 may further include a memory 903, configured to store instructions to be executed by the processor 902, store input data needed for running the instructions by the processor 902, or store data generated after the processor 902 runs the instructions.

When the communication apparatus 900 is configured to implement the methods shown in FIG. 3, FIG. 4, FIG. 5, and FIG. 7, the communication interface 901 is configured to implement functions of the communication unit 801, and the processor 902 is configured to implement functions of the processing unit 802.

A specific connection medium between the communication interface 901, the processor 902, and the memory 903 is not limited in this embodiment of this application. In this embodiment of this application, the memory 903, the processor 902, and the communication interface 901 are connected through a communication bus 904 in FIG. 9. The communication bus 904 is represented by using a thick line in FIG. 9. A connection manner between other components is merely an example for description, and is not limited thereto. The communication bus 904 may be classified into an address bus, a data bus, a control bus, and the like. For ease of representation, only one thick line represents the bus in FIG. 9, but this does not mean that there is only one bus or only one type of bus.

When the foregoing communication apparatus is a chip, FIG. 10 is a simplified diagram of an apparatus structure of a chip. The chip 1000 includes an interface circuit 1001 and one or more processors 1002. Optionally, the chip 1000 may further include a bus.

The processor 1002 may be an integrated circuit chip, having a signal processing capability. In an implementation process, steps in the foregoing communication method may be implemented by using a hardware integrated logic circuit in the processor 1002, or by using instructions in a form of software. The processor 1002 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1002 may implement or perform the methods and steps that are disclosed in embodiments of this application. The general-purpose processor may be a microprocessor, or the processor may be any conventional processor or the like.

The interface circuit 1001 may be configured to send or receive data, instructions, or information. The processor 1002 may perform processing by using the data, the instructions, or other information received by using the interface circuit 1001, and may send processed information through the interface circuit 1001.

Optionally, the chip further includes a memory 1003. The memory 1003 may include a read-only memory and a random access memory, and provide operation instructions and data for the processor. A part of the memory 1003 may further include a non-volatile random access memory (NVRAM).

Optionally, the memory stores an executable software module or a data structure, and the processor may perform a corresponding operation by invoking the operation instructions stored in the memory (the operation instructions may be stored in an operating system).

Optionally, the chip may be used in the terminal device, the first access network device, or the second access network device in embodiments of this application. Optionally, the interface circuit 1001 may be configured to output an execution result of the processor 1002. For the communication method provided in one or more embodiments of this application, refer to the foregoing embodiments. Details are not described herein again.

It should be noted that functions corresponding to the interface circuit 1001 and the processor 1002 may be implemented by using a hardware design, may be implemented by using a software design, or may be implemented by using a combination of software and hardware. This is not limited herein.

An embodiment of this application further provides a computer-readable storage medium. The computer-readable storage medium stores computer instructions used for implementing the method performed by the terminal device, the first access network device, or the second access network device in the foregoing method embodiments.

For example, when a computer program is executed by a computer, the computer is enabled to implement the method performed by the terminal device, the first access network device, or the second access network device in the foregoing method embodiments.

An embodiment of this application further provides a computer program product including instructions. When the instructions are executed by a computer, the computer is enabled to implement the method performed by the terminal device, the first access network device, or the second access network device in the foregoing method embodiments.

An embodiment of this application further provides a chip, including a processor, configured to invoke a computer program or computer instructions stored in a memory, to enable the processor to perform the communication methods in the embodiments shown in FIG. 3, FIG. 4, FIG. 5, and FIG. 7.

In a possible implementation, an input of the chip corresponds to the receiving operation in the embodiments shown in FIG. 3, FIG. 4, FIG. 5, and FIG. 7, and an output of the chip corresponds to the sending operation in the embodiments shown in FIG. 3, FIG. 4, FIG. 5, and FIG. 7.

Optionally, the processor is coupled to the memory through an interface.

Optionally, the chip further includes the memory. The memory stores the computer program or the computer instructions.

The processor mentioned in any one of the foregoing may be a general-purpose central processing unit, a microprocessor, an application-specific integrated circuit (application-specific integrated circuit, ASIC), or one or more integrated circuits configured to control program execution of one communication method in the embodiments shown in FIG. 3, FIG. 4, FIG. 5, and FIG. 7. The storage mentioned in any one of the foregoing may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, refer to the corresponding communication method embodiments provided above. Details are not described herein again.

In this application, a hardware layer, an operating system layer running above the hardware layer, and an application layer running above the operating system layer may be further included between communication apparatuses. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely logical function division, and may be other division during actual implementation. In addition, functional modules in embodiments of this application may be integrated into one processor, may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by using hardware, firmware or a combination thereof. When the software is used for the implementation, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a computer. Examples of the computer-readable medium include but are not limited to: a RAM, a ROM, an electrically erasable programmable read-only memory (electrically erasable programmable read-only memory, EEPROM), a compact disc read-only memory (compact disc read-only memory, CD-ROM) or another optical disc storage, a disk storage medium or another disk storage device, or any other medium that can be used to carry or store expected program code in a form of instructions or a data structure and that can be accessed by the computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk usually copies data magnetically, and the disc copies data optically by using a laser. The foregoing combination should also be included in the protection scope of the computer-readable medium.

In conclusion, the foregoing descriptions are merely embodiments of this application and are not intended to limit the protection scope of this application. Any modification, equivalent substitution, and improvement made based on the disclosure of this application shall fall within the protection scope of this application.

## Claims

1. A communication method, wherein the method is applied to a terminal device and comprises:
receiving a first handover message from a first access network device, wherein the first handover message indicates the terminal device to switch, to a second cell, from a first cell in which the terminal device is currently located, and the second cell is a cell managed by a second access network device; and
performing first data transmission with the second access network device based on the first handover message by using a secret key of the first cell.

2. The method according to claim 1, wherein the first handover message comprises cell configuration indication information, and the cell configuration indication information indicates that the second cell uses same configuration information as the first cell.

3. The method according to claim 1 or 2, wherein performing first data transmission with the second access network device by using the secret key of the first cell comprises:
when a communication connection to the second cell is established, and a secret key of the second cell is not derived, performing first data transmission with the second access network device by using the secret key of the first cell.

4. The method according to claim 3, wherein performing first data transmission with the second access network device by using the secret key of the first cell comprises:
performing encryption and integrity protection processing on uplink data by using the secret key of the first cell, to obtain uplink first data; and sending the uplink first data to the second access network device; and/or
receiving downlink first data from the second access network device, and performing decryption and integrity check processing on the downlink first data by using the secret key of the first cell.

5. The method according to claim 3, wherein after the communication connection to the second cell is established, the method further comprises: receiving configuration information of the secret key of the second cell from the second access network device.

6. The method according to any one of claims 3 to 5, wherein the method further comprises:
identifying the first data by using a first target identifier, wherein the first target identifier is any one of the following:
an identifier of a first bearer, an identifier of a first logical channel, and a first identifier carried in the first data, wherein the first bearer or the first logical channel is used for transmission of the first data.

7. The method according to any one of claims 1 to 6, wherein after the secret key of the second cell is derived, the method further comprises:
performing encryption and integrity protection processing on uplink data by using the secret key of the second cell, to obtain uplink second data; and sending the uplink second data to the second access network device; and/or
receiving downlink second data from the second access network device, and performing decryption and integrity check processing on the downlink second data by using the secret key of the second cell.

8. The method according to claim 7, wherein the method further comprises:
identifying the second data by using a second target identifier, wherein the second target identifier is any one of the following:
an identifier of a second bearer, an identifier of a second logical channel, and a second identifier carried in the second data, wherein the second bearer or the second logical channel is used for transmission of the second data.

9. The method according to any one of claims 1 to 8, wherein the method further comprises:
receiving first indication information from the second access network device, wherein the first indication information indicates the terminal device to perform one or more of the following:
stopping using the secret key of the first cell to process data, deleting the secret key of the first cell, stopping processing associated with the secret key of the first cell, releasing the first bearer or the first logical channel of the first data, and stopping comprising the second identifier in the second data.

10. A communication method, wherein the communication method is applied to a first access network device and comprises:
sending a first handover message to a terminal device, wherein the first handover message indicates the terminal device to switch, to a second cell, from a first cell in which the terminal device is currently located, and the second cell is a cell managed by a second access network device; and
performing first data transmission with the second access network device by using a secret key of the first cell.

11. The method according to claim 10, wherein before sending the first handover message to the terminal device, the method further comprises: sending first handover request information to the second access network device, wherein the first handover request information comprises address information of a user plane tunnel of the first access network device; and
receiving first handover response information from the second access network device, wherein the first handover response information comprises address information of a user plane tunnel of the second access network device.

12. The method according to claim 11, wherein the first handover request information further comprises third indication information, and the third indication information is used to request the second cell to use configuration information of the first cell; the first handover response information indicates that the second cell acknowledges to use the configuration information of the first cell; and the configuration information of the first cell comprises uplink physical layer channel configuration information of the first cell and downlink physical layer channel configuration information of the first cell.

13. The method according to any one of claims 10 to 12, wherein before performing first data transmission with the second access network device by using the secret key of the first cell, the method further comprises:
receiving a first response message from the terminal device, wherein the first response message is used to notify that the terminal device acknowledges to switch from the first cell to the second cell; and
performing first data transmission with the second access network device by using the secret key of the first cell comprises:
performing encryption and integrity protection processing on downlink data by using the secret key of the first cell, to obtain downlink first data; and sending the downlink first data to the second access network device based on the address information of the user plane tunnel of the second access network device; and/or
receiving uplink first data from the second access network device, and performing decryption and integrity check processing on the uplink first data by using the secret key of the first cell, to obtain uplink data.

14. The method according to any one of claims 10 to 13, wherein the method further comprises:
receiving second indication information from the second access network device, wherein the second indication information indicates the first cell or the first access network device to stop generating or sending the first data and release a first bearer or a first logical channel of the first data; and
sending first status information to the second access network device, wherein the first status information indicates identification information of the first data that has been successfully sent and/or is not successfully sent.

15. The method according to claim 14, wherein the method further comprises:
sending third data to the second access network device, wherein the third data is the data that is not successfully sent and on which encryption and integrity protection processing are not performed.

16. The method according to any one of claims 10 to 15, wherein the method further comprises:
identifying the first data by using a first target identifier, wherein the first target identifier is any one of the following:
an identifier of the first bearer, an identifier of the first logical channel, and a first identifier carried in the first data, wherein the first bearer or the first logical channel is used for transmission of the first data.

17. A communication method, wherein the communication method is applied to a second access network device and comprises:
receiving downlink first data from a first access network device, and sending the downlink first data to a terminal device; and/or
receiving uplink first data from the terminal device, and sending the uplink first data to the first access network device, wherein
the first data is data obtained through encryption and integrity protection processing by using a secret key of the first cell.

18. The method according to claim 17, wherein the method further comprises:
receiving first handover request information from the first access network device, wherein the first handover request information comprises address information of a user plane tunnel of the first access network device; and
sending first handover response information to the first access network device, wherein the first handover response information comprises address information of a user plane tunnel of the second access network device.

19. The method according to claim 18, wherein the first handover request information further comprises third indication information, and the third indication information is used to request the second cell to use configuration information of the first cell; the first handover response information indicates that the second cell acknowledges to use the configuration information of the first cell; and the configuration information of the first cell comprises uplink physical layer channel configuration information of the first cell and downlink physical layer channel configuration information of the first cell.

20. The method according to claim 18, wherein sending the uplink first data to the first access network device comprises:
sending the uplink first data to the first access network device based on the address information of the user plane tunnel of the first access network device.

21. The method according to any one of claims 17 to 20, wherein the method further comprises:
receiving uplink second data from the terminal device; performing decryption and integrity check processing on the uplink second data by using a secret key of the second cell, to obtain uplink data; and sending the uplink data to a user plane function network element in a core network device; and/or
receiving downlink data from the user plane function network element in the core network device and/or the first access network device; performing encryption and integrity protection processing on the downlink data by using the secret key of the second cell, to obtain downlink second data; and sending the downlink second data to the terminal device.

22. The method according to claim 17 or 21, wherein the method further comprises:
sending path switch request information to an access and mobility management function network element in the core network device after a first event, wherein the path switch request information is used to request to switch a data transmission path from a corresponding first path between the user plane function network element and the first access network device to a corresponding second path between the user plane function network element and the second access network device, and the first event is any one of the following:
receiving the downlink first data from the first access network device, receiving the uplink first data from the terminal device, and receiving the uplink second data from the terminal device.

23. The method according to claim 22, wherein the method further comprises:
receiving path switch response information from the access and mobility management function network element, and obtaining configuration information of the secret key of the second cell from the path switch response information, wherein
the path switch response information indicates that the data transmission path has been switched from the first path to the second path.

24. The method according to claim 23, wherein the method further comprises:
sending first indication information to the terminal device, and sending second indication information to the first access network device, wherein
the first indication information indicates the terminal device to perform one or more of the following:
stopping using the secret key of the first cell to process data, deleting the secret key of the first cell, stopping processing associated with the secret key of the first cell, releasing a first bearer or a first logical channel of the first data, and stopping comprising a second identifier in the second data; and
the second indication information indicates the first cell or the first access network device to stop generating or sending the first data and release the first bearer or the first logical channel of the first data.

25. The method according to claim 23, wherein the method further comprises:
receiving first status information from the first access network device, wherein the first status information indicates identification information of the first data that has been successfully sent and/or is not successfully sent.

26. The method according to claim 25, wherein the method further comprises:
receiving third data from the first access network device, wherein the third data is the data that is not successfully sent and on which encryption and integrity protection processing are not performed.

27. The method according to any one of claims 17 to 26, wherein the method further comprises:
identifying the first data by using a first target identifier, wherein the first target identifier is any one of the following:
an identifier of the first bearer, an identifier of the first logical channel, and a first identifier carried in the first data, wherein the first bearer or the first logical channel is used for transmission of the first data; and
identifying the second data by using a second target identifier, wherein the second target identifier is any one of the following:
an identifier of a second bearer, an identifier of a second logical channel, and the first identifier carried in the second data, wherein the second bearer or the second logical channel is used for transmission of the second data.

28. A communication apparatus, comprising a module or unit configured to perform the method according to any one of claims 1 to 9, a module or unit configured to perform the method according to any one of claims 10 to 16, or a module or unit configured to perform the method according to any one of claims 17 to 27.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 9, the method according to any one of claims 10 to 16, or the method according to any one of claims 17 to 27 by using a logic circuit or by executing code instructions.

30. A communication system, comprising a terminal device, a first access network device, and a second access network device, wherein the terminal device is configured to implement the method according to any one of claims 1 to 9, the first access network device is configured to implement the method according to any one of claims 10 to 16, and the second access network device is configured to implement the method according to any one of claims 17 to 27.

31. A computer program product, comprising a computer program, wherein when the computer program is executed by a communication apparatus, the method according to any one of claims 1 to 27 is implemented.

32. A computer-readable storage medium, wherein the storage medium stores a computer program or instructions; and when the computer program or the instructions are executed by a communication apparatus, the method according to any one of claims 1 to 27 is implemented.

33. A chip system, comprising a processor, wherein the processor is configured to perform the method according to any one of claims 1 to 27.
